# EUROPEAN PATENT APPLICATION

(11) **EP 4 836 100 A1**
(43) Date of publication of application: **04.11.2026**
(21) Application number: 24941179.4
(22) Date of filing: 31.05.2024
(51) Int. Cl.: H01M 50/102, H01M 50/531, H01M 50/202

(54) **BATTERY CELL, BATTERY, AND ELECTRIC DEVICE**

(71) Applicant: Contemporary Amperex Technology Co., Limited, Ningde, Fujian 352100 (CN)
(72) Inventor: LIN, Wenfa, Ningde, Fujian 352100 (CN); CHEN, Congsheng, Ningde, Fujian 352100 (CN); HUANG, Biao, Ningde, Fujian 352100 (CN); LUO, Weijie, Ningde, Fujian 352100 (CN)
(74) Representative: Straus, Alexander
(86) International application number: PCT/CN2024/096889
(87) International publication number: WO 2025/245892

(57) **Abstract**

A battery cell (20), a battery (100), and an electric device. The battery cell (20) comprises: a casing component (21), which comprises a casing body (24), wherein an accommodating cavity (204) is defined inside the casing body (24), the casing body (24) is provided with an opening (241) and a first casing wall (242) surrounding the circumferential edge of the opening (241), the first casing wall (242) comprises at least two sections, the section close to the opening (241) among the at least two sections is a first section (2421), and the thickness of the first section (2421) is greater than the thickness of the other section; a cover plate (22), which covers the opening (241) and is connected to the first section (2421); and a battery core component (23), which is arranged in the accommodating cavity (204).

## Description

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and service life. However, some existing battery cells have insufficient housing strength, which may lead to breathing fatigue cracking.

### SUMMARY

Embodiments of the present application provide a battery cell, a battery, and an electric device. A housing body and a housing cover of the battery cell are less prone to breathing fatigue cracking, and the battery cell has high energy density and good service reliability.

In a first aspect, the embodiments of the present application provide a battery cell. The battery cell includes: a housing component, including a housing body, where an accommodating cavity is defined inside the housing body, the housing body is provided with an opening and a first housing wall surrounding a circumferential edge of the opening, the first housing wall includes at least two sections, a section of the at least two sections that is proximal to the opening is a first section, and a thickness of the first section is greater than a thickness of the other sections; a cover plate, covering the opening and connected to the first section; and a cell component, disposed in the accommodating cavity.

In the above technical solution, by providing the first section with a relatively large thickness on the first housing wall, and allowing the first section to be proximal to the opening, when the cover plate is connected to the first housing wall to form the housing, the cover plate is connected to the thickest first section. The thickest first section exhibits higher structural strength, such that deformation under the action of an external force is less likely to occur, thereby reducing the likelihood of fatigue cracking caused by repeated deformation. Furthermore, since the first section has a larger thickness, the connection area between the cover plate and the housing body is larger. In summary, the cover plate and the first section are less prone to separation, resulting in better connection stability. The overall fatigue resistance of the housing is better, making it less prone to fatigue cracking. In addition, the part of the first housing wall distal to the opening includes the other sections, which are mainly configured to define the accommodating cavity for accommodating the cell component. Therefore, the thickness of the other sections may be relatively small, such that the volume of the accommodating cavity is large enough to accommodate the cell component with a relatively large volume, while avoiding excessive increase in the mass of the housing component and excessive reduction in the energy density of the battery. Accordingly, the battery cell according to the present application not only has good structural strength and long fatigue life, but also exhibits better operational safety. Moreover, the energy density of the battery is high.

In some embodiments, the at least two sections include a plurality of sections, and in a direction from the opening toward an inner side of the housing body, thicknesses of the plurality of sections sequentially decrease.

In the above technical solution, the likelihood of rupture of the housing during forming and stretching can be reduced, resulting in strong manufacturability. In addition, the section most distal to the opening is the thinnest, which is conducive to increasing the volume of the accommodating cavity, reducing the weight of the housing component, and improving the capacity density of the battery.

In some embodiments, a thickness difference between any two adjacent sections is T, where 0 mm < T ≤ 0.2 mm.

In the above technical solution, the thickness difference between two adjacent sections is not excessively large, the thickness does not change abruptly, the connecting part between two connected sections is less prone to breakage after bending, and the housing body exhibits good structural strength.

In some embodiments, a section of the at least two sections that is most distal to the opening is a second section, the second section is provided with a starting edge proximal to the first section, the first section is provided with a terminal edge proximal to the starting edge, and a distance between the terminal edge and the starting edge is L, where 6 mm ≤ L ≤ 20 mm.

In the above technical solution, when the distance between the terminal edge and the starting edge falls within this range, sufficient space can be defined for accommodating the bottom support plate and the insulating sheet.

In some embodiments, 6 mm ≤ L ≤ 10 mm.

In the above technical solution, when the distance between the terminal edge and the starting edge falls within this range, sufficient space can be defined for accommodating the bottom support plate and the insulating sheet.

In some embodiments, one of two opposite ends of the housing body is provided with the opening, and the other end is provided with a second housing wall; a section of the at least two sections that is most distal to the opening is a second section, a thickness of the second section is less than a thickness of other sections, and an end, distal to the opening, of the second section extends to the second housing wall.

In the above technical solution, the integrity of the first housing wall and the second housing wall is improved, making them less prone to cracking and providing better sealing performance. Moreover, there is no need to consider adaptation to a joining process. Therefore, the thickness of the second section can be set to be the thinnest, and the weight of the first section can be minimized, thereby improving the energy density of the battery.

In some embodiments, the thickness of the first section is H1, where 0.5 mm < H1 ≤ 0.9 mm.

In the above technical solution, in one aspect, the difficulty in connecting the first section to the cover plate is reduced, the requirements for the connection strength between the first section and the cover plate can be well satisfied, and good structural strength is provided. The connection area between the first section and the cover plate is larger, resulting in good fatigue resistance of the housing body and making the housing body less prone to openings and cracks. In another aspect, the thickness of the first section is not excessively large, and the housing body is not too heavy, thereby being conducive to achieving high energy density of the battery.

In some embodiments, a section of the at least two sections that is most distal to the opening is a second section, and a thickness of the second section is H2, where 0.1 mm ≤ H2 < 0.5 mm.

In the above technical solution, in one aspect, the thickness of the second section is not excessively small, which can meet the structural strength requirements of the second section, such that the second section is less prone to deformation and damage, and good fatigue and aging resistance is provided; in another aspect, the thickness of the second section is not excessively large, such that the second section has a relatively low mass, which is conducive to enabling the battery to achieve high energy density.

In some embodiments, the at least two sections include three sections, a section located at a middle position among the three sections is a third section, and a thickness of the third section is H3, where 0.3 mm < H3 ≤ 0.7 mm.

In the above technical solution, the thickness change between the first section and the third section and the thickness change between the second section and the third section are not excessively large, the joint between the first section and the third section and the joint between the third section and the second section are less prone to breakage, and meanwhile, the structural strength of the third section is also relatively high.

In some embodiments, a first transition chamfer or a first transition fillet is provided between any two adjacent sections.

In the above technical solution, in one aspect, the abrupt thickness change between the two adjacent sections will not occur, and the joint between the two adjacent sections is less prone to breakage; in another aspect, the housing body does not have sharp edges, such that it is less likely to scratch the insulating sheet in the accommodating cavity and the housing body is less prone to wear. In addition, the manufacturability of the housing body is improved.

In some embodiments, a stepped part is formed between any two adjacent sections, an inner wall surface, located on an inner side of the accommodating cavity, of the first housing wall is provided with the stepped part, and an outer wall surface, located on an outer side of the accommodating cavity, of the first housing wall is a flat surface.

In the above technical solution, when the housing body is manufactured, the risk of rupture of the plate due to stretching is low, such that the yield rate is high. In addition, the volume of the accommodating cavity is large, thereby providing a large expansion space when the cell component expands, and reducing the likelihood of deformation of the housing component under compression.

In some embodiments, a stepped part is formed between any two adjacent sections, an outer wall surface, located on an outer side of the accommodating cavity, of the first housing wall is provided with the stepped part, and an inner wall surface, located on an inner side of the accommodating cavity, of the first housing wall is a flat surface.

In the above technical solution, the manufacturing process is simple, which can reduce the manufacturing cost.

In some embodiments, a stepped part is formed between any two adjacent sections, and an outer wall surface located on an outer side of the accommodating cavity and an inner wall surface located on an inner side of the accommodating cavity of the first housing wall are provided with the stepped part.

In the above technical solution, when the housing body according to the embodiments is manufactured, the risk of rupture of the plate due to stretching is low, such that the yield rate is high. Meanwhile, the manufacturing process is simple, which can reduce the manufacturing cost.

In some embodiments, the first section is provided with a groove located on an inner side of the accommodating cavity, a side end, proximal to an opening edge, of the cover plate is provided with a protruding part, and the protruding part is disposed in the groove.

In the above technical solution, in one aspect, the connection is simple, and the connection method between the cover plate and the first section is more flexible. For example, a welding connection or a fastener connection may be employed. After the above connection methods are adopted, subsequent welding connection or fastener connection can provide higher connection strength and better connection effect. The structure is simple, the connection cost is low, and meanwhile, the cover plate covering the opening provides good sealing performance.

In some embodiments, a second transition chamfer or a second transition fillet is formed at an end, distal to the accommodating cavity, of the opening.

In the above technical solution, the edge of the opening is less likely to scratch the cell component during the process of loading the cell component into the accommodating cavity.

In some embodiments, one of two opposite ends of the housing body is provided with the opening, and the other end is provided with a second housing wall; the battery cell further includes a post terminal component, and the cell component is connected to the post terminal component.

The second housing wall is provided with a mounting hole, and the post terminal component is mounted on the second housing wall and covers the mounting hole; or the cover plate is provided with a mounting hole, and the post terminal component is mounted on the cover plate and covers the mounting hole.

In the above technical solution, the post terminal component is mounted on the second housing wall and covers the mounting hole, which can effectively reduce the probability of cracking at the weld seam between the housing body and the cover plate during use of the battery and improve the reliability of the battery cell; the post terminal component is mounted on the cover plate and covers the mounting hole, resulting in lower assembly difficulty.

In some embodiments, the post terminal component includes a post terminal body, a surface of the post terminal body on an end facing the cell component is an inner end surface of the post terminal body, and the cell component is connected to the inner end surface of the post terminal body via a conductive part.

In the above technical solution, the difficulty in assembly and connection between the conductive part and the post terminal body can be reduced, the processing efficiency can be improved, and the reduction in the length of the conductive part can be facilitated, thereby saving materials and costs.

In some embodiments, the cell component includes an active substance-coated part accommodated in the accommodating cavity and a tab part connected to the active substance-coated part, the tab part includes a gathering part formed by stacking and connecting a plurality of layers of tab plates, and at least part of the gathering part is laid on the inner end surface of the post terminal body and is connected to the inner end surface of the post terminal body.

In the above technical solution, by laying the gathering part on the inner end surface of the post terminal body, the gathering part is in a flattened and spread-out state, and at least part of the gathering part falls on the inner end surface of the post terminal body. This will not cause damage to the tab part due to the bending of the gathering part, thereby improving the conductive performance. Moreover, it facilitates the pressing of the gathering part by a welding press nozzle, thereby improving the connection reliability between the gathering part and the post terminal body.

In some embodiments, the post terminal component includes a post terminal body, the cell component includes an active substance-coated part accommodated in the accommodating cavity and a tab part connected to the active substance-coated part, and the tab part is connected to the post terminal body via a conductive member.

In the above technical solution, the conductive member may be connected to the inner end surface of the post terminal body, thereby shortening the length of the conductive member.

In some embodiments, the conductive member includes a first connecting segment, the first connecting segment includes two clamping parts, the tab part includes a tab end part, and the tab end part is sandwiched between the two clamping parts and is connected to the clamping parts.

In the above technical solution, the two clamping parts can be used to limit the tab end part, thereby improving the connection reliability of the plurality of layers of tab plates in the tab end part.

In some embodiments, a surface of the post terminal body on an end facing the cell component is an inner end surface of the post terminal body, the conductive member includes a second connecting segment, the second connecting segment is laid on the inner end surface of the post terminal body and is connected to the inner end surface of the post terminal body, the conductive member is bent at a connection position between the first connecting segment and the second connecting segment, such that the first connecting segment is located on a side, distal to the post terminal body, of the second connecting segment, and one of the clamping parts is supported on a side, distal to the post terminal body, of the tab end part.

In the above technical solution, by supporting the tab part with the clamping part, the redundancy of the tab part can be improved, and the risk of short circuit caused by the reverse insertion of the active substance-coated part into the tab part can be reduced. Moreover, the bent conductive member can serve as a buffer and support, thereby reducing the risk of the cell component impacting the housing component, and improving the reliability of the battery cell.

In some embodiments, the tab part includes a gathering part formed by stacking and connecting a plurality of layers of tab plates, the conductive member includes a first connecting segment, and the gathering part is stacked on a side of the first connecting segment in a thickness direction and is connected to the first connecting segment.

In the above technical solution, the first connecting segment is in the form of a plate, and the thickness direction of the first connecting segment is consistent with the thickness direction of the gathering part. The first connecting segment and the gathering part are stacked in the thickness direction of the first connecting segment, such that the mating method between the gathering part and the conductive member is simple, which is conducive to improving the production efficiency.

In some embodiments, a surface of the post terminal body on an end facing the cell component is an inner end surface of the post terminal body, and the first connecting segment is supported on a side, distal to the post terminal body, of the gathering part, such that the gathering part is sandwiched between the inner end surface of the post terminal body and the first connecting segment.

In the above technical solution, by supporting the gathering part with the first connecting segment, the redundancy of the tab part can be improved, and the risk of short circuit caused by the reverse insertion of the active substance-coated part into the tab part can be reduced.

In some embodiments, the post terminal component includes a post terminal body, an adapter structure, and an insulating and sealing structure, the adapter structure surrounds the post terminal body and is connected to the cover plate or the housing body, and the insulating and sealing structure is fitted between the adapter structure and the post terminal body in an insulating and sealing manner.

In the above technical solution, in addition to the post terminal body, the post terminal component further includes the adapter structure connected to the housing, and the insulating and sealing structure serving an insulating and sealing function is disposed between the adapter structure and the post terminal body, such that when the post terminal component is mounted on the housing and the adapter structure is connected to the housing, no sealing member or the like needs to be disposed between the adapter structure and the housing, and no large sealing pressure needs to be applied to meet the compression degree of the sealing member at this position. This can reduce the force received by the second housing wall or the cover plate and protect the housing, thereby helping to reduce the wall thickness of the housing and reducing material costs.

In some embodiments, the adapter structure is formed as an elongated strip extending in a length direction of the first housing wall, and a contour shape of the post terminal body matches a contour shape of the adapter structure; or the adapter structure is formed as an elongated strip extending in a length direction of the first housing wall, and the post terminal body is disposed at a central position of the adapter structure in the length direction and is circular.

In the above technical solution, the connection position between the adapter structure and the post terminal body is subjected to a uniform force, making it easy to control the compression amount of the insulating and sealing structure, thereby improving the reliability of the sealing fit between the adapter structure and the post terminal body.

In some embodiments, the battery cell further includes: a post terminal component, where the post terminal component is disposed on the housing component, the post terminal component includes a post terminal body, the cell component includes an electrode assembly, tab plates of the electrode assembly are connected to form a gathering part, and the gathering part is connected to the post terminal body; and a pressure relief device, where the pressure relief device is disposed on the housing component, and the pressure relief device and the post terminal component are located on a same side or different sides.

In the above technical solution, the pressure relief device and the post terminal component are located on the same side. Thus, the design of other housing walls other than the second housing wall can be simplified, and the structure and processing of the battery cell can be simplified. The pressure relief device and the post terminal component are located on different sides. Thus, there is no need to reduce the volume of the post terminal component in view of the space occupied by the pressure relief device on the second housing wall, such that the shape and volume of the post terminal component can be flexibly designed as required.

In a second aspect, the embodiments of the present application further provide a battery. The battery includes the foregoing battery cell.

In the above technical solutions, the probability of cracking between a housing cover and the housing body of the battery cell during use is relatively low, thereby improving the reliability of the battery and helping to improve the performance of the electric device.

In some embodiments, the battery includes a case assembly, a plurality of battery cells are provided and accommodated in the case assembly, a bottom of the case assembly is a case bottom plate, the opening of the housing body faces the case bottom plate, and the cover plate covers a bottom of the housing body; or the opening of the housing body faces away from the case bottom plate, and the cover plate covers a top of the housing body.

In the above technical solution, once thermal runaway occurs in a battery cell, pressure can be relieved from the bottom of the battery cell, allowing the central venting channel design to be eliminated, thereby further freeing up space for the battery cell. This is conducive to improving the energy density of the battery, and meanwhile, directional pressure relief can be quickly achieved, such that ejecta can be rapidly discharged in a specified direction through the optimal channel, making it less likely to spread to the surrounding cells.

In a third aspect, the embodiments of the present application further provide an electric device. The electric device includes the above battery, and the battery is configured to provide electric energy.

In the above technical solutions, the probability of cracking between a housing cover and the housing body of the battery cell during use is relatively low, thereby improving the reliability of the battery and helping to improve the performance of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a first cross-sectional view of a housing component in a battery cell according to some embodiments of the present application;
FIG. 4 is a second cross-sectional view of a housing component in a battery cell according to some embodiments of the present application;
FIG. 5 is a partially enlarged view of portion A in FIG. 4;
FIG. 6 is a cross-sectional view of a housing component in a battery cell according to some other embodiments of the present application;
FIG. 7 is a partially enlarged view of portion B in FIG. 6;
FIG. 8 is a cross-sectional view of a housing component in a battery cell according to still some other embodiments of the present application;
FIG. 9 is a partially enlarged view of portion C in FIG. 8;
FIG. 10 is a cross-sectional view of a housing component in a battery cell according to yet still some other embodiments of the present application;
FIG. 11 is a partially enlarged view of portion D in FIG. 10;
FIG. 12 is a cross-sectional view of a housing component in a battery cell according to still yet some other embodiments of the present application;
FIG. 13 is a partially enlarged view of portion E in FIG. 12;
FIG. 14 is a cross-sectional view of a housing component in a battery cell according to also some other embodiments of the present application;
FIG. 15 is a partially enlarged view of portion F in FIG. 14;
FIG. 16 is a schematic three-dimensional structural diagram of a housing component in a battery cell according to some embodiments of the present application;
FIG. 17 is a schematic diagram of a manufacturing process of a housing body according to some embodiments of the present application;
FIG. 18 is a schematic structural diagram illustrating a process of connecting a cover plate to a first section according to some embodiments of the present application;
FIG. 19 is a partially enlarged view of portion G in FIG. 18;
FIG. 20 is a top view of a battery cell according to some embodiments of the present application;
FIG. 21 is a cross-sectional view along line A-A in FIG. 20;
FIG. 22 is a cross-sectional view of a battery cell according to some embodiments of the present application;
FIG. 23 is a partially enlarged view of FIG. 22;
FIG. 24 is a partially enlarged view of portion H in FIG. 23;
FIG. 25 is a schematic structural diagram of a battery cell according to some embodiments of the present application; and
FIG. 26 is a schematic structural diagram of a cell component and a post terminal component in a battery cell according to some embodiments of the present application.

### Reference numerals:

battery cell 20;
housing 2; housing component 21; cover plate 22;
cell component 23;
active substance-coated part 231; tab part 232; tab end part 2321; tab plate 233;
gathering part 234; stacked part 237; electrode assembly 235; axial cross-section of cell component 236;
housing body 24;
opening 241; first housing wall 242; first section 2421; second section 2422;
third section 2423; second housing wall 243; first transition chamfer 244; stepped part 245;
groove 246; protruding part 247; second transition fillet 248; mounting hole 249; accommodating cavity 204;
post terminal component 25;
post terminal body 251; inner end surface 2511 of post terminal body; adapter structure 252; insulating and sealing structure 253;
conductive part 26;
conductive member 261; first connecting segment 2611; clamping part 2612; second connecting segment 2613;
pressure relief device 27; rolled aluminum plate 30; aluminum housing punch 400; aluminum housing die 500; blank holder ring 600;
battery 100; case assembly 10; first part 101; second part 102;
controller 200; motor 300; vehicle 1000.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, solid-state batteries, or the like. This is not limited in the embodiments of the present application. The battery cell may be cylindrical, flat, rectangular parallelepiped-shaped, or in other shapes. This is also not limited in the embodiments of the present application.

The battery cell includes a housing, a cell component, and an electrolytic solution. The housing is configured to accommodate the cell component and the electrolytic solution (in a solid-state battery, the electrolytic solution may be a solid-state electrolyte layer located between positive and negative electrode plates). The cell component includes at least one electrode assembly. The electrode assembly is composed of a positive electrode plate, a negative electrode plate, and a separator (this structure can be omitted in the solid-state battery), and the electrode assembly may be of a wound structure, a stacked structure, or the like. The battery cell primarily works by the movement of metal ions between the positive electrode plate and the negative electrode plate.

The positive electrode plate may generally include a positive electrode current collector and a positive electrode active substance layer. The positive electrode active substance layer is directly or indirectly applied to the positive electrode current collector. The positive electrode current collector that is not coated with the positive electrode active substance layer protrudes from the positive electrode current collector coated with the positive electrode active substance layer. The positive electrode current collector that is not coated with the positive electrode active substance layer serves as a positive electrode tab plate. Taking lithium-ion batteries as an example, the material of the positive electrode current collector may be aluminum, and the material of the positive electrode active substance layer may be lithium cobaltate, lithium iron phosphate, ternary lithium, lithium manganate, or the like.

The negative electrode plate may generally include a negative electrode current collector and a negative electrode active substance layer. The negative electrode active substance layer is directly or indirectly applied on the negative electrode current collector, the negative electrode current collector not coated with the negative electrode active substance layer protrudes from the negative electrode current collector coated with the negative electrode active substance layer, and the negative electrode current collector not coated with the negative electrode active substance layer serves as a negative electrode tab plate. The material of the negative electrode current collector may be copper, and the material of the negative electrode active substance layer may be carbon, silicon, or the like. The material of the separator is not limited, and may be, e.g., polypropylene or polyethylene.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements in terms of both safety and use performance.

In the related art, during the manufacturing of a battery cell, a current collector is coated with an active substance layer and then cut to obtain an electrode plate consisting of a current collector coated with an active substance layer (referred to as an active substance-coated part) and a current collector not coated with an active substance layer (referred to as a tab plate). The positive and negative electrode plates and a separator are then stacked or wound in sequence to obtain an electrode assembly. In the electrode assembly, a plurality of tab plates are stacked to form a tab part. The tab part is connected to an adapter piece to form a conductive part, or the tab part itself forms a conductive part; the active substance-coated part and the conductive part form a cell component. The housing of the battery cell is provided with a post terminal. During the manufacturing of the battery cell, the conductive part is usually welded to the post terminal to ensure normal charging and discharging operations.

At present, the housing of the battery generally adopts a thin-housing structure of 0.3 mm to 0.5 mm. The housing features a small wall thickness, low weight, and small space occupation, which is conducive to improving the energy density of the battery. However, the assembly is difficult, and the fatigue resistance is poor. The joint between the housing body and the cover plate is prone to damage and cracking, resulting in gaps that lead to electrolytic solution leakage, battery failure, and other undesirable situations. For example, the housing body is provided with an opening at the top, the post terminal is disposed on the cover plate, and the cover plate covers the opening and is welded to the housing body, where the weld seam is at the topmost end of the battery cell. However, when the battery cells are assembled into a battery, the bottom of the housing body should be fixed, and the post terminals of adjacent battery cells are connected by conductive components (such as a busbar). Since the post terminals are disposed on the cover plate, when the battery vibrates or deforms in use, the conductive components will pull the post terminals. The pulling force of the conductive components to the post terminals can be easily transmitted to the weld seams between the cover plate and the housing body, causing material fatigue and cracking at the weld seams between the cover plate and the housing body, thereby affecting the reliability of the battery cells.

In some other related technologies, to improve the strength of the housing, the wall thickness of the housing body is increased to 0.7 mm, which greatly reduces the assembly difficulty. The weld seam between the cover plate and the housing body is less prone to material fatigue cracking, thereby improving the fatigue resistance of the housing. However, the mass and volume of the housing are also significantly increased, which reduces the energy density of the battery and is not conducive to improving the competitiveness of battery products.

Based on the above considerations, to improve the fatigue resistance of the housing without excessively increasing the mass and volume of the housing and excessively reducing the energy density of the battery, the present application provides a battery cell. The battery cell includes a housing component, a cover plate, and a cell component. The housing component includes a housing body, and an accommodating cavity is defined inside the housing body. The housing body is provided with an opening and a first housing wall surrounding the circumferential edge of the opening. The first housing wall includes at least two sections. The section of the at least two sections that is proximal to the opening is a first section, and the thickness of the first section is greater than the thickness of the other sections. The cover plate covers the opening and is connected to the first section. The cell component is disposed in the accommodating cavity.

In the battery cell with this structure, by providing the first section with a relatively large thickness on the first housing wall, and allowing the first section to be proximal to the opening, when the cover plate is connected to the first housing wall to form the housing, the cover plate is connected to the thickest first section. The thickest first section exhibits higher structural strength, such that deformation under the action of an external force is less likely to occur, thereby reducing the likelihood of fatigue cracking caused by repeated deformation. Furthermore, since the first section has a larger thickness, the connection area between the cover plate and the housing body is larger. In summary, the cover plate and the first section are less prone to separation, resulting in better connection stability. The overall fatigue resistance of the housing is better, making it less prone to fatigue cracking. In addition, the part of the first housing wall distal to the opening includes the other sections, which are mainly configured to define the accommodating cavity for accommodating the cell component. Therefore, the thickness of the other sections may be relatively small, such that the volume of the accommodating cavity is large enough to accommodate the cell component with a relatively large volume, while avoiding excessive increase in the mass of the housing component and excessive reduction in the energy density of the battery. Accordingly, the battery cell according to the present application not only has good structural strength and long fatigue life, but also exhibits better operational safety. Moreover, the energy density of the battery is high.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, and electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

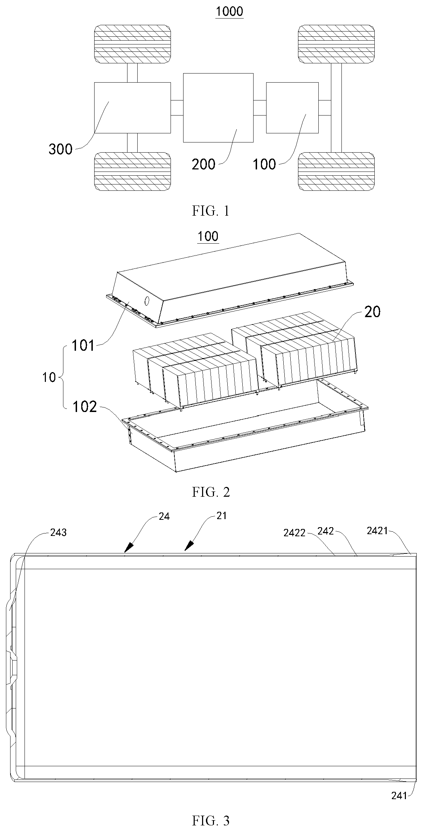

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case assembly 10 and battery cells 20. The battery cells 20 are accommodated in the case assembly 10.

The case assembly 10 is configured to provide an accommodating space for the battery cells 20, and the case assembly 10 may be of a variety of structures. In some embodiments, the case assembly 10 may include a first part 101 and a second part 102. The first part 101 and the second part 102 are lidded with each other, and the first part 101 and the second part 102 jointly define an accommodating space for accommodating the battery cells 20. The second part 102 may be of a hollow structure with one end open, and the first part 101 may be of a plate-shaped structure. An open side of the second part 102 is lidded with the first part 101, such that the first part 101 and the second part 102 jointly define the accommodating space. The first part 101 and the second part 102 may also both be of a hollow structure with one side open, and the open side of the second part 102 is lidded with an open side of the first part 101. Certainly, the case assembly 10 formed by the first part 101 and the second part 102 may be in various shapes, such as a cylinder and a rectangular parallelepiped.

The case assembly 10 can prevent liquid or other foreign matter from affecting the charging or discharging of the battery cells 20. Certainly, some other batteries 100 may not include the above case assembly 10 and are directly disposed in the battery mounting compartment of the electric device.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case assembly 10. Certainly, the situation may be that in the battery 100, the plurality of battery cells 20 are first connected in series, in parallel, or in series-parallel to form battery modules, and then the plurality of battery 1 modules are connected in series, in parallel, or in series-parallel to form a whole and accommodated in the case assembly 10. The battery 100 may further include other structures. For example, the battery 100 may further include a busbar component for achieving an electrical connection among the plurality of battery cells 20.

The battery cell 20 according to the embodiments of the present application is described below with reference to the drawings.

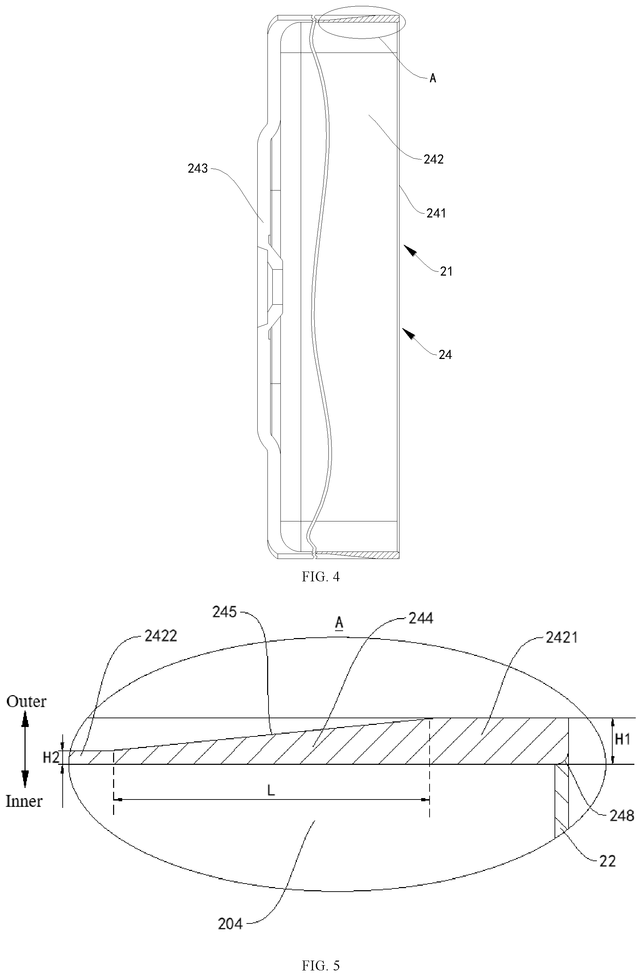

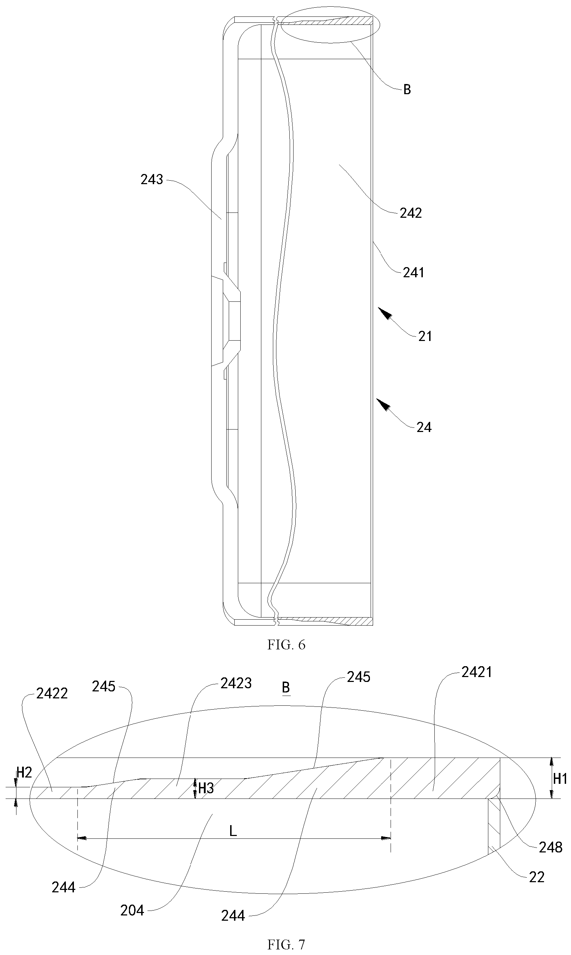

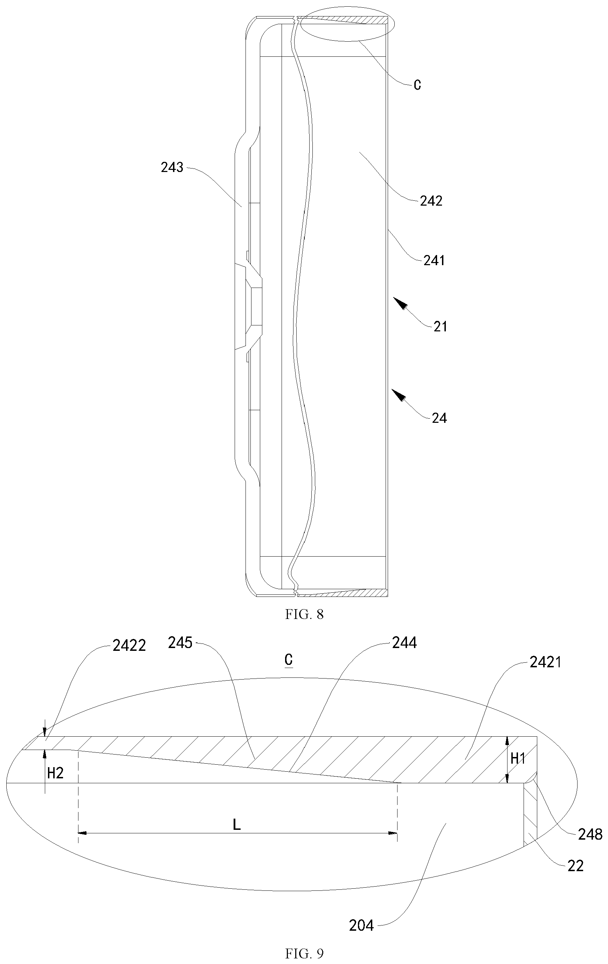

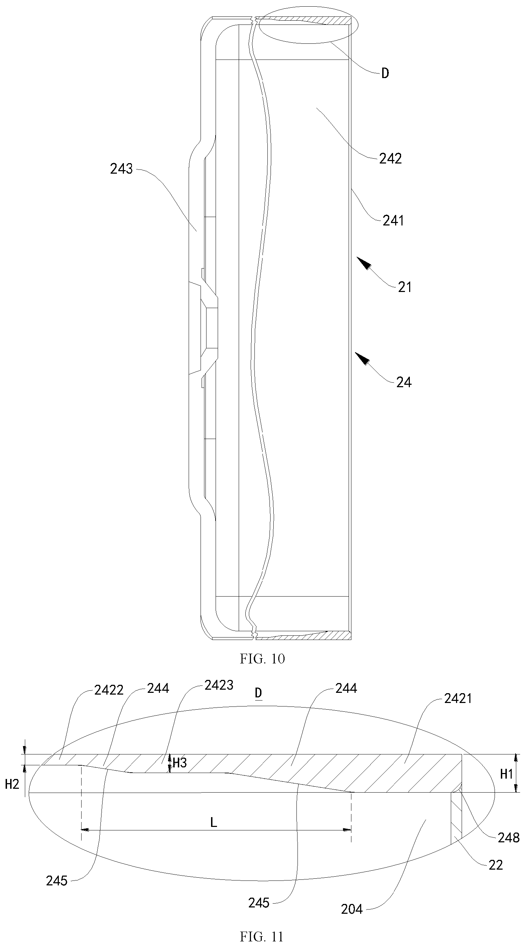

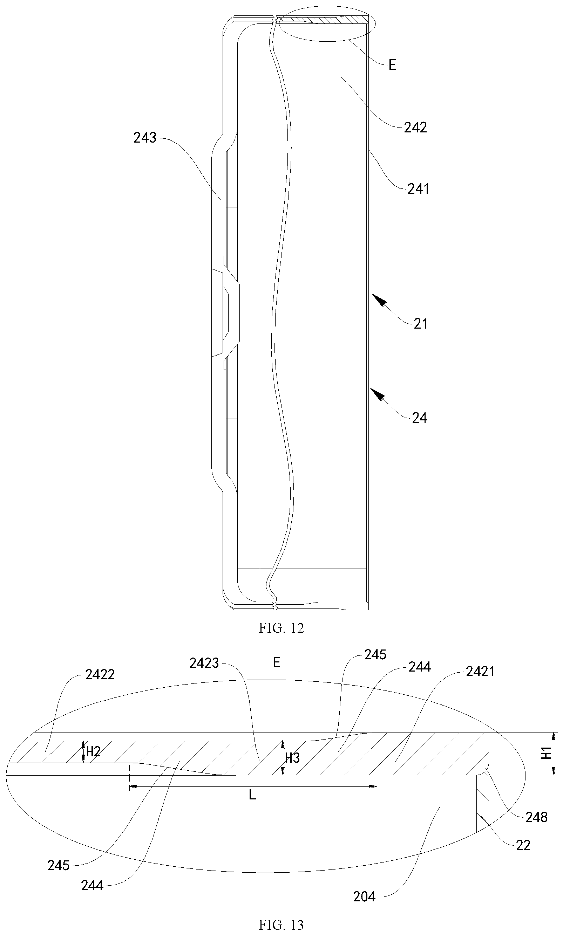

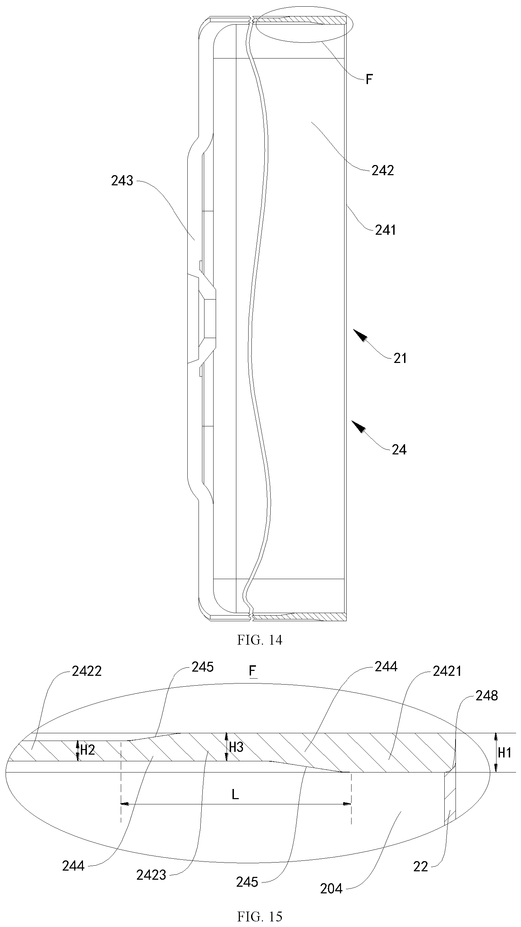

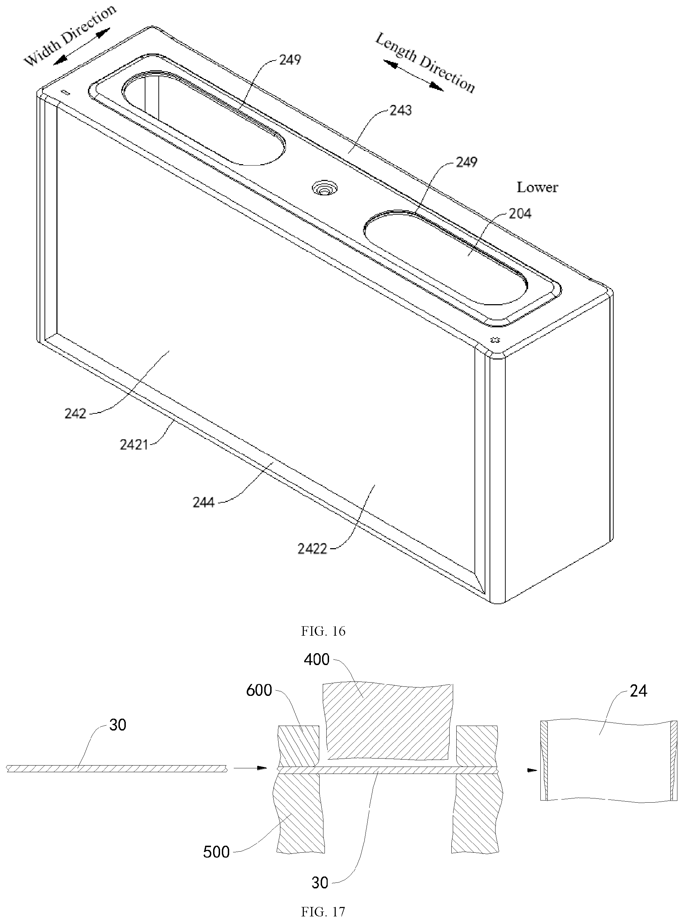

Referring to FIGs. 3 to 16, FIG. 3 is a first cross-sectional view of a housing component 21 in a battery cell 20 according to some embodiments of the present application; FIG. 4 is a second cross-sectional view of a housing component 21 in a battery cell 20 according to some embodiments of the present application; FIG. 5 is a partially enlarged view of portion A in FIG. 4; FIG. 6 is a cross-sectional view of a housing component 21 in a battery cell 20 according to some other embodiments of the present application; FIG. 7 is a partially enlarged view of portion B in FIG. 6; FIG. 8 is a cross-sectional view of a housing component 21 in a battery cell 20 according to still some other embodiments of the present application; FIG. 9 is a partially enlarged view of portion C in FIG. 8; FIG. 10 is a cross-sectional view of a housing component 21 in a battery cell 20 according to yet still some other embodiments of the present application; FIG. 11 is a partially enlarged view of portion D in FIG. 10; FIG. 12 is a cross-sectional view of a housing component 21 in a battery cell 20 according to still yet some other embodiments of the present application; FIG. 13 is a partially enlarged view of portion E in FIG. 12; FIG. 14 is a cross-sectional view of a housing component 21 in a battery cell 20 according to also some other embodiments of the present application; FIG. 15 is a partially enlarged view of portion F in FIG. 14; and FIG. 16 is a schematic three-dimensional structural diagram of a housing component 21 in a battery cell 20 according to some embodiments of the present application.

The battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding a circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204.

Illustratively, one end of the housing body 24 is provided with the opening 241, the opening 241 is lidded with the cover plate 22, and the housing body 24 and the cover plate 22 jointly define, in an enclosing manner, the accommodating cavity 204. Alternatively, illustratively, the battery cell 20 may include a housing body 24 and two cover plates 22. Both ends of the housing body 24 are provided with openings 241, each opening 241 is covered with a cover plate 22, and the two cover plates 22 and the housing body 24 jointly define, in an enclosing manner, the accommodating cavity 204.

The cover plate 22 and the housing body 24 may be made of aluminum alloy, steel, aluminum-plastic film, plastic, or other materials resistant to electrolytic solution corrosion, which may be selected based on design requirements in practice.

Illustratively, the first housing wall 242 is formed by the housing wall of the housing body 24 surrounding the circumferential edge of the opening 241 and located on one side or both sides of the housing body 24 in the width direction; alternatively, illustratively, the first housing wall 242 is formed by the housing wall of the housing body 24 surrounding the circumferential edge of the opening 241 and located on one side or both sides of the housing body 24 in the length direction; alternatively, illustratively, the first housing wall 242 is formed by the housing wall of the housing body 24 surrounding the circumferential edge of the opening 241 and located on one side or both sides of the housing body 24 in the width direction and the housing wall of the housing body 24 surrounding the circumferential edge of the opening 241 and located on one side or both sides of the housing body 24 in the length direction.

The first housing wall 242 may include only two sections, where the thickness of the first section 2421 proximal to the opening 241 is greater than the thickness of the other section. Alternatively, the first housing wall 242 may include more than two sections. The thickness of the first section 2421 proximal to the opening 241 is greater than the thicknesses of the other sections. In a direction from the opening 241 toward the inner side of the housing body 24, the thickness of the other sections may sequentially decrease, or the thickness of the other sections may first decrease and then increase or first increase and then decrease, or the thickness of the other sections may vary irregularly.

The cover plate 22 covers the opening 241 and is connected to the first section 2421. That is, the cover plate 22 is connected to the thickest section of the housing body 24. The thickest first section 2421 exhibits higher structural strength, such that deformation under the action of an external force is less likely to occur, thereby reducing the likelihood of fatigue cracking caused by repeated deformation. Furthermore, since the first section 2421 has a larger thickness, the connection area between the cover plate 22 and the first section 2421 is larger. In summary, better connection strength is achieved between the cover plate 22 and the housing body 24, making it less prone to fatigue cracking and increasing the structural strength of the housing body 24. The thickness of the other sections is less than the thickness of the first section 2421. That is, by making the part configured to accommodate the cell component 23 relatively thin, the present application enables the housing body 24 to be lightweight, and increases the volume of the accommodating cavity 204 of the housing body 24, thereby better meeting the requirements for energy density improvement and weight reduction. Specifically, the cover plate 22 may be connected to the first section 2421 by welding, or may be connected to the first section 2421 by a fastener. After the housing body 24 and the cover plate 22 are connected, a housing 2 is formed.

According to the battery cell 20 of the embodiments of the present application, by providing the first section 2421 with a relatively large thickness on the first housing wall 242, and allowing the first section 2421 to be proximal to the opening 241, when the cover plate 22 is connected to the first housing wall 242 to form the housing 2, the cover plate 22 is connected to the thickest first section 2421. The thickest first section 2421 exhibits higher structural strength, such that deformation under the action of an external force is less likely to occur, thereby reducing the likelihood of fatigue cracking caused by repeated deformation. Furthermore, since the first section 2421 has a larger thickness, the connection area between the cover plate 22 and the first section 2421 is larger. In summary, the cover plate 22 and the housing body 24 are less prone to separation, resulting in better connection stability. The overall fatigue resistance of the housing 2 is better, making it less prone to fatigue cracking. In addition, the part of the first housing wall 242 distal to the opening 241 includes the other sections, which are mainly configured to define the accommodating cavity 204 for accommodating the cell component 23. Therefore, the thickness of the other sections may be relatively small, such that the volume of the accommodating cavity 204 is large enough to accommodate the cell component 23 with a relatively large volume, while avoiding excessive increase in the mass of the housing component 21 and excessive reduction in the energy density of the battery 100. Accordingly, the battery cell 20 according to the present application not only has good structural strength and long fatigue life, but also exhibits better operational safety. Moreover, the energy density of the battery 100 is high.

In some embodiments, the at least two sections include a plurality of sections, and in the direction from the opening 241 toward the inner side of the housing body 24, the thicknesses of the plurality of sections sequentially decrease.

The thicknesses of the plurality of sections sequentially decrease. In other words, in the direction from the opening 241 toward the inner side of the housing body 24, the plurality of sections are a first section 2421, a third section, a fourth section, ..., an N-th section, and a second section 2422. The thickness of the third section is less than that of the first section 2421, the thickness of the fourth section is less than that of the third section, and the thickness of the second section 2422 is less than that of the N-th section.

As shown in FIGs. 3 to 5, 8, and 9, two sections are provided, and in the direction from the opening 241 toward the inner side of the housing body 24, the thicknesses of the two sections sequentially decrease. As shown in FIGs. 6, 7, and 10 to 15, three sections are provided, and in the direction from the opening 241 toward the inner side of the housing body 24, the thicknesses of the three sections sequentially decrease.

The sequential decrease in the thicknesses of the plurality of sections may include the following: the thickness changes of the plurality of sections show a continuous linear or continuous non-linear change trend; or the thickness changes of the plurality of sections show a discontinuous change trend; or the thickness changes of the plurality of sections partially show a continuous change trend and partially show a discontinuous change trend.

Referring to FIG. 17, FIG. 17 is a schematic diagram of a manufacturing process of a housing body 24 according to some embodiments of the present application. When the housing body 24 is processed and formed, the circumferential edge of a rolled aluminum plate 30 is first sandwiched between an aluminum housing die 500 and a blank holder ring 600, and then an aluminum housing punch 400 presses the middle part of the rolled aluminum plate 30 from one side, thereby forming the housing body 24 including at least two sections.

In the embodiments, in the direction from the opening 241 toward the inner side of the housing body 24, the thicknesses of the plurality of sections sequentially decrease. In this way, the likelihood of rupture of the housing 2 during forming and stretching can be reduced, resulting in strong manufacturability. In addition, the section most distal to the opening 241 is the thinnest, which is conducive to increasing the volume of the accommodating cavity 204, reducing the weight of the housing component 21, and improving the capacity density of the battery 100.

In some embodiments, a thickness difference between any two adjacent sections is T, where 0 mm < T ≤ 0.2 mm.

For example, the thickness difference between any two adjacent sections may be the same or different. The thickness difference between any two adjacent sections may be 0.2 mm, 0.18 mm, 0.16 mm, 0.14 mm, 0.12 mm, 0.1 mm, 0.08 mm, 0.06 mm, 0.04 mm, 0.02 mm, or any value between any two of the foregoing values.

In this way, the thickness difference between two adjacent sections is not excessively large, the thickness does not change abruptly, the connecting part between two connected sections is less prone to breakage after bending, and the housing body 24 exhibits good structural strength.

In some embodiments, referring to FIGs. 5, 7, 9, 11, 13, and 15, the section of the at least two sections that is most distal to the opening 241 is the second section 2422, the second section 2422 is provided with a starting edge proximal to the first section 2421, the first section 2421 is provided with a terminal edge proximal to the starting edge, and a distance between the terminal edge and the starting edge is L, where 6 mm ≤ L ≤ 20 mm.

For example, the distance between the terminal edge and the starting edge may be 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, or any value between any two of the foregoing values. In practice, the distance between the terminal edge and the starting edge may be adjusted based on requirements.

It should be noted that the space defined by the first section 2421 and located on the inner side of the accommodating cavity 204 is generally configured to accommodate the cover plate 22, the space defined by the second section 2422 and located on the inner side of the accommodating cavity 204 is generally configured to accommodate an electrode assembly 235, and the space defined by the section between the second section 2422 and the first section 2421 and located on the inner side of the accommodating cavity 204 is configured to accommodate a bottom support plate and an insulating sheet in the battery cell 20. The bottom support plate is configured to first resist a compressive force when the battery cell 20 is subjected to compression, so as to reduce the risk of compression on the electrode assembly 235. The insulating sheet is configured to wrap the outer side of the electrode assembly 235 to insulate the electrode assembly 235 from the housing body 24. When the distance between the terminal edge and the starting edge falls within this range, sufficient space can be defined for accommodating the bottom support plate and the insulating sheet. In addition, the distance between the terminal edge and the starting edge falls within this range; that is, the minimum distance between the first section 2421 and the second section 2422 falls within this range. In this way, the thickness change between the first section 2421 and the second section 2422 has a relatively large gradual transition space, such that abrupt changes are less likely to occur and better structural strength is provided.

In some embodiments, referring to FIGs. 5, 7, 9, 11, 13, and 15, the section of the at least two sections that is most distal to the opening 241 is the second section 2422, the second section 2422 is provided with a starting edge proximal to the first section 2421, the first section 2421 is provided with a terminal edge proximal to the starting edge, and the distance between the terminal edge and the starting edge is L, where 6 mm ≤ L ≤ 10 mm.

For example, the distance between the terminal edge and the starting edge may be 6 mm, 7 mm, 8 mm, 9 mm, 10 mm, or any value between any two of the foregoing values. In practice, the distance between the terminal edge and the starting edge may be adjusted based on requirements.

It should be noted that the space defined by the first section 2421 and located on the inner side of the accommodating cavity 204 is generally configured to accommodate the cover plate 22, the space defined by the second section 2422 and located on the inner side of the accommodating cavity 204 is generally configured to accommodate the electrode assembly 235, and the space defined by the section between the second section 2422 and the first section 2421 and located on the inner side of the accommodating cavity 204 may be configured to accommodate the bottom support plate and the insulating sheet in the battery cell 20. The bottom support plate is configured to first resist a compressive force when the battery cell 20 is subjected to compression, so as to reduce the risk of compression on the electrode assembly 235. The insulating sheet is configured to wrap the outer side of the electrode assembly 235 to insulate the electrode assembly 235 from the housing body 24. When the distance between the terminal edge and the starting edge falls within this range, sufficient space can be defined for accommodating the bottom support plate and the insulating sheet. In addition, the distance between the terminal edge and the starting edge falls within this range; that is, the minimum distance between the first section 2421 and the second section 2422 falls within this range. In this way, the thickness change between the first section 2421 and the second section 2422 has a relatively large gradual transition space, such that no abrupt change in thickness occurs and better structural strength is provided.

In some embodiments, referring to FIGs. 5, 7, 9, 11, 13, and 15, one of two opposite ends of the housing body 24 is provided with the opening 241, and the other end is provided with a second housing wall 243. The section of the at least two sections that is most distal to the opening 241 is the second section 2422, the thickness of the second section 2422 is less than the thickness of the other sections, and an end, distal to the opening 241, of the second section 2422 extends to the second housing wall 243.

Specifically, the space defined by the second housing wall 243 and the second section 2422 is used to accommodate the electrode assembly 235. The second housing wall 243 is integrally formed with the first housing wall 242. In this way, the integrity of the first housing wall 242 and the second housing wall 243 is improved, making them less prone to cracking and providing better sealing performance. Moreover, there is no need to consider adaptation to a joining process. Therefore, the thickness of the second section 2422 can be set to be the thinnest, and the weight of the first section 2421 can be minimized, thereby improving the energy density of the battery 100.

In some embodiments, referring to FIGs. 5, 7, 9, 11, 13, and 15, the thickness of the first section 2421 is H1, where 0.5 mm < H1 ≤ 0.9 mm.

That is, the thickness of the first section 2421 is 0.7 ± 0.2 mm, and the thicknesses of the first section 2421 and the second section 2422 are not equal. For example, the thickness of the first section 2421 may be 0.55 mm, 0.6 mm, 0.65 mm, 0.7 mm, 0.75 mm, 0.8 mm, 0.85 mm, 0.9 mm, or any value between any two of the foregoing values.

The thickness of the first section 2421 falls within this range. In one aspect, the difficulty in connecting the first section 2421 to the cover plate 22 is reduced, the requirements for the connection strength between the first section and the cover plate 22 can be well satisfied, and good structural strength is provided. The connection area between the first section 2421 and the cover plate 22 is larger, resulting in good fatigue resistance of the housing body 24 and making the housing body less prone to openings and cracks. In another aspect, the thickness of the first section 2421 is not excessively large, and the housing body 24 is not too heavy, thereby being conducive to achieving high energy density of the battery 100.

In some embodiments, referring to FIGs. 5, 7, 9, 11, 13, and 15, the section of the at least two sections that is most distal to the opening 241 is the second section 2422, and the thickness of the second section 2422 is H2, where 0.1 mm ≤ H2 < 0.5 mm.

That is, the thickness of the second section 2422 is 0.3 ± 0.2 mm, and the thicknesses of the first section 2421 and the second section 2422 are unequal. For example, the thickness of the second section 2422 may be 0.1 mm, 0.15 mm, 0.2 mm, 0.25 mm, 0.3 mm, 0.35 mm, 0.4 mm, 0.45 mm, or any value between any two of the foregoing values.

The thickness of the second section 2422 falls within this range. In one aspect, the thickness of the second section 2422 is not excessively small, which can meet the structural strength requirements of the second section 2422, such that the second section 2422 is less prone to deformation and damage, and good fatigue and aging resistance is provided; in another aspect, the thickness of the second section 2422 is not excessively large, such that the second section 2422 has a relatively low mass, which is conducive to enabling the battery 100 to achieve high energy density.

In some embodiments, referring to FIGs. 7, 11, 13, and 15, the at least two sections include three sections, the section located at the middle position among the three sections is a third section 2423, and the thickness of the third section 2423 is H3, where 0.3 mm < H3 ≤ 0.7 mm.

Illustratively, the thickness of the third section 2423 may be between the first section 2421 and the second section 2422, and the thickness of the third section 2423 is 0.5 ± 0.2 mm. For example, the thickness of the third section 2423 may be 0.35 mm, 0.4 mm, 0.45 mm, 0.5 mm, 0.55 mm, 0.6 mm, 0.65 mm, 0.7 mm, or any value between any two of the foregoing values.

The thickness of the third section 2423 falls within this range. In this way, the thickness change between the first section 2421 and the third section 2423 and the thickness change between the second section 2422 and the third section 2423 are not excessively large, the joint between the first section 2421 and the third section 2423 and the joint between the third section 2423 and the second section 2422 are less prone to breakage, and meanwhile, the structural strength of the third section 2423 is also relatively high.

In some embodiments, referring to FIGs. 5, 7, 9, 11, 13, and 15, a first transition chamfer 244 or a first transition fillet is provided between any two adjacent sections.

By providing the first transition chamfer 244 or the first transition fillet between two adjacent sections, in one aspect, the abrupt thickness change between the two adjacent sections will not occur, and the joint between the two adjacent sections is less prone to breakage; in another aspect, the housing body 24 does not have sharp edges, such that it is less likely to scratch the insulating sheet in the accommodating cavity 204 and the housing body is less prone to wear. In addition, the manufacturability of the housing body is improved.

In some embodiments, as shown in FIGs. 8 to 11, a stepped part 245 is formed between any two adjacent sections, an inner wall surface, located on the inner side of the accommodating cavity 204, of the first housing wall 242 is provided with the stepped part 245, and an outer wall surface, located on the outer side of the accommodating cavity 204, of the first housing wall 242 is a flat surface.

That is, the stepped part 245 is located on the inner wall surface on the inner side of the accommodating cavity 204, and the stepped part 245 may be an inclined flat surface or an arc-shaped surface connecting the inner wall surfaces, located on the inner side of the accommodating cavity 204, of two adjacent sections. In embodiments where two sections are provided, one stepped part 245 may be provided; and in embodiments where more than two sections are provided, a plurality of stepped parts 245 are correspondingly provided.

The stepped part 245 is located on the inner wall surface of the first housing wall 242, and the outer wall surface, located on the outer side of the accommodating cavity 204, of the first housing wall 242 is a flat surface. In this way, when the housing body 24 is manufactured, the risk of rupture of the plate due to stretching is low, such that the yield rate is high. In addition, the volume of the accommodating cavity 204 is large, thereby providing a large expansion space when the cell component 23 expands, and reducing the likelihood of deformation of the housing component 21 under compression.

In some embodiments, as shown in FIGs. 3 to 7, a stepped part 245 is formed between any two adjacent sections, the outer wall surface, located on the outer side of the accommodating cavity 204, of the first housing wall 242 is provided with the stepped part 245, and the inner wall surface, located on the inner side of the accommodating cavity 204, of the first housing wall 242 is a flat surface.

That is, the stepped part 245 is located on the outer wall surface on the outer side of the accommodating cavity 204, and the stepped part 245 may be an inclined flat surface or an arc-shaped surface connecting the outer wall surfaces, located on the outer side of the accommodating cavity 204, of two adjacent sections. In embodiments where two sections are provided, one stepped part 245 may be provided; and in embodiments where more than two sections are provided, a plurality of stepped parts 245 are correspondingly provided.

The stepped part 245 is located on the outer wall surface of the first housing wall 242, and the inner wall surface located on the inner side of the accommodating cavity 204 is a flat surface. In this way, the manufacturing process is simple, which can reduce the manufacturing cost. In addition, when the battery cells 20 are placed side by side, a chamber is formed between adjacent battery cells 20, and the chamber may be configured to accommodate other elements to optimize or increase the performance of the battery 100; or when the battery cells 20 expand, the stress caused by the compression between the battery cells 20 is reduced.

In some embodiments, referring to FIGs. 12 to 15, the stepped part 245 is formed between any two adjacent sections, and the outer wall surface located on the outer side of the accommodating cavity 204 and the inner wall surface located on the inner side of the accommodating cavity 204 of the first housing wall 242 are provided with the stepped part 245.

That is, the outer wall surface of the first housing wall 242 and the inner wall surface of the first housing wall 242 are both provided with the stepped part 245. For example, three sections are provided. The section most proximal to the opening 241 is the first section 2421, the section most distal to the opening 241 is the second section 2422, the section between the first section 2421 and the second section 2422 is the third section 2423, the stepped part 245 between the first section 2421 and the third section 2423 may be located on the outer wall surface on the outer side of the accommodating cavity 204, and the stepped part 245 between the second section 2422 and the third section 2423 may be located on the inner wall surface on the inner side of the accommodating cavity 204. Alternatively, the stepped part 245 between the first section 2421 and the third section 2423 may be located on the inner wall surface on the inner side of the accommodating cavity 204, and the stepped part 245 between the second section 2422 and the third section 2423 may be located on the outer wall surface on the outer side of the accommodating cavity 204.

When the housing body 24 according to the embodiments is manufactured, the risk of rupture of the plate due to stretching is low, such that the yield rate is high. Meanwhile, the manufacturing process is simple, which can reduce the manufacturing cost. Furthermore, the volume of the accommodating cavity 204 can be increased, thereby providing an expansion space when the cell component 23 expands, and reducing the likelihood of deformation of the housing component 21 under compression. In addition, when the battery cells 20 are placed side by side, a chamber may also be formed between adjacent battery cells 20, and the chamber may be configured to accommodate other elements to optimize or increase the performance of the battery 100; or when the battery cells 20 expand, the likelihood of stress generation caused by the compression between the battery cells 20 is reduced.

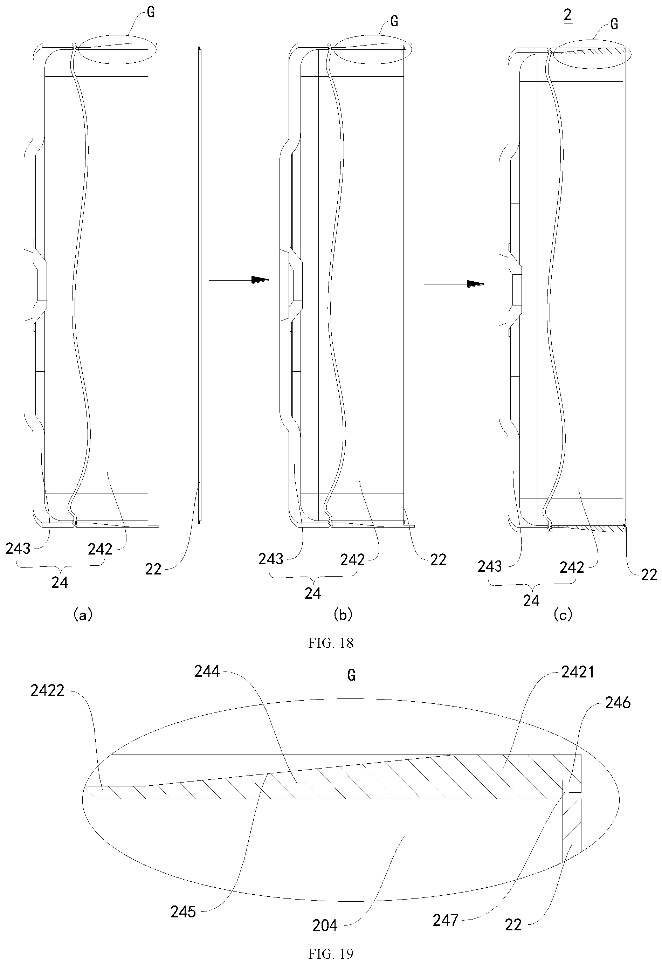

In some embodiments, referring to FIG. 19, FIG. 19 is a partially enlarged view of portion G in FIG. 18. The first section 2421 is provided with a groove 246 located on the inner side of the accommodating cavity 204, a side end, proximal to the edge of the opening 241, of the cover plate 22 is provided with a protruding part 247, and the protruding part 247 is disposed in the groove 246.

Referring to FIG. 18, FIG. 18 is a schematic structural diagram illustrating a process of connecting the cover plate 22 and the first section 2421 according to some embodiments of the present application. As shown in FIG. 18(a), in an initial state, an end surface, facing away from the second section 2422, of the first section 2421 is provided with a flange, and the side end of the cover plate 22 is provided with the protruding part 247. During mounting, the protruding part 247 of the cover plate 22 is first brought into contact with the end surface, facing away from the second section 2422, of the first section 2421 (see FIG. 18(b)), and then the flange is bent, such that the flange and the end surface, facing away from the second section 2422, of the first section 2421 jointly define the groove 246. In addition, the protruding part 247 of the cover plate 22 is fixed in the groove 246 (see FIG. 18(c)).

By adopting the above connection method, in one aspect, the connection is simple, and the connection method between the cover plate 22 and the first section 2421 is more flexible. For example, a welding connection or a fastener connection may be employed. After the above connection method is adopted, subsequent welding connection or fastener connection can provide higher connection strength and better connection effect. The structure is simple, the connection cost is low, and meanwhile, the cover plate 22 covering the opening 241 provides good sealing performance.

In some embodiments, referring to FIGs. 5, 7, 9, 11, 13, and 15, a second transition chamfer or a second transition fillet 248 is formed at an end, distal to the accommodating cavity 204, of the opening 241.

That is, the second transition chamfer may be formed at the end, distal to the accommodating cavity 204, of the opening 241; or the second transition fillet 248 may also be formed at the end, distal to the accommodating cavity 204, of the opening 241. The second transition chamfer or the second transition fillet 248 may cooperate with the side end, proximal to the edge of the opening 241, of the cover plate 22, or may not cooperate with the cover plate 22.

In embodiments where the second transition chamfer or the second transition fillet 248 cooperates with the side end, proximal to the edge of the opening 241, of the cover plate 22, in one aspect, the edge of the opening 241 is less likely to scratch the cell component 23 during the process of loading the cell component 23 into the accommodating cavity 204; in another aspect, the second transition chamfer or the second transition fillet 248 can serve to position the connection position of the cover plate 22, thereby facilitating rapid determination of the fixing position of the cover plate 22. In addition, the connection area between the cover plate 22 and the first section 2421 can also be increased.

In embodiments where the second transition chamfer or the second transition fillet 248 does not cooperate with the cover plate 22, for example, the cover plate 22 may be directly connected to the end surface, facing away from the second section 2422, of the first section 2421. In this case, the arrangement of the second transition chamfer or the second transition fillet 248 helps to ensure that the edge of the opening 241 is less likely to scratch the cell component 23 during the process of loading the cell component 23 into the accommodating cavity 204.

According to some embodiments of the present application, referring to FIG. 3, one of the two opposite ends of the housing body 24 is provided with an opening 241, and the other end is provided with a second housing wall 243. The battery cell 20 further includes a post terminal component 25, and the cell component 23 is connected to the post terminal component 25. The second housing wall 243 is provided with a mounting hole 249, and the post terminal component 25 is mounted on the second housing wall 243 and covers the mounting hole 249. Alternatively, the cover plate 22 is provided with a mounting hole 249, and the post terminal component 25 is mounted on the cover plate 22 and covers the mounting hole 249.

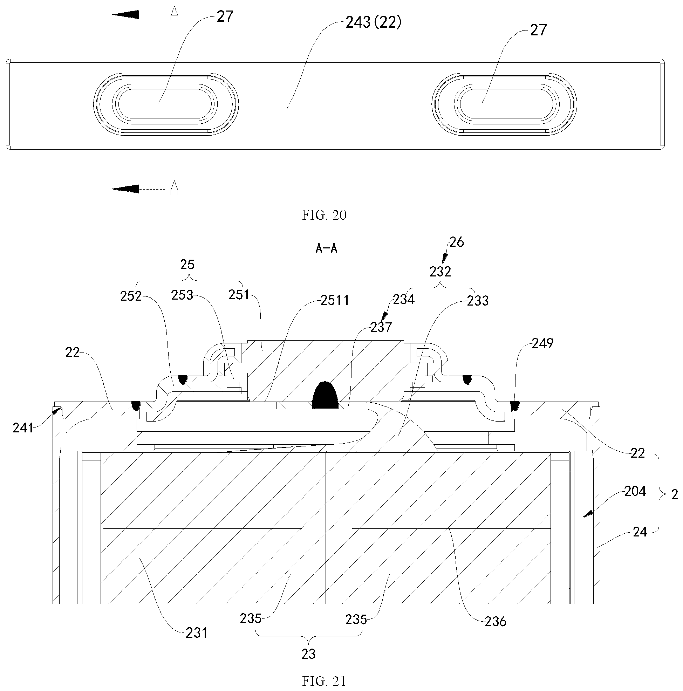

The structure of the housing component 21 is not limited. Illustratively, when the post terminal component 25 is mounted on the cover plate 22, with reference to FIGs. 20 and 21, one end of the housing body 24 is provided with the opening 241, the opening 241 is lidded with the cover plate 22, and the housing body 24 and the cover plate 22 jointly define, in an enclosing manner, the accommodating cavity 204. Alternatively, illustratively, the battery cell 20 may include a housing body 24 and two cover plates 22. Both ends of the housing body 24 are provided with openings 241, each opening 241 is covered with a cover plate 22, the two cover plates 22 and the housing body 24 jointly define, in an enclosing manner, the accommodating cavity 204, and the post terminal component 25 is mounted on one of the cover plates 22.

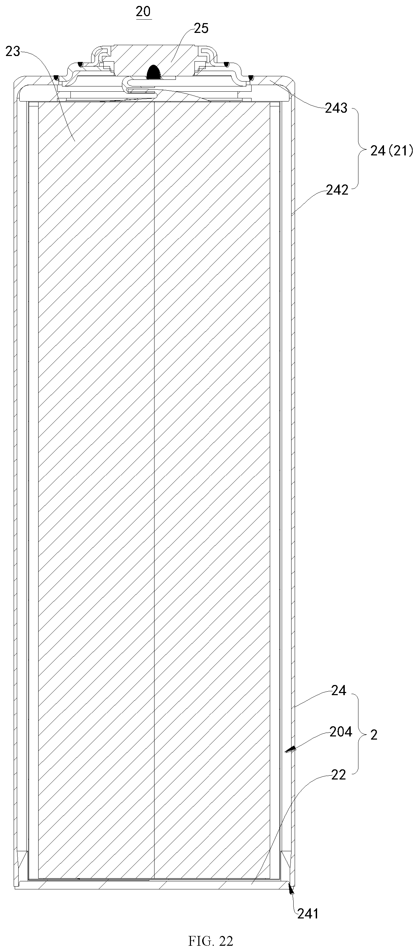

Illustratively, when the post terminal component 25 is mounted on the second housing wall 243, with reference to FIGs. 22, 23, and 25, one end of the housing body 24 is provided with the opening 241, the opening 241 is lidded with the cover plate 22, the housing body 24 and the cover plate 22 jointly define, in an enclosing manner, the accommodating cavity 204, and one end, opposite to the opening 241, of the housing body 24 forms the second housing wall 243.

The housing body 24 is an integrated member; that is, the housing body 24 is an integrally formed part and includes the first housing wall 242 and the second housing wall 243. The first housing wall 242 surrounds the edge of the second housing wall 243, and the first housing wall 242 extends from the edge of the second housing wall 243 toward one side of the second housing wall 243 in the thickness direction. An end, distal to the second housing wall 243, of the first housing wall 242 defines the opening 241, a cavity is defined between the first housing wall 242 and the second housing wall 243, and the cavity constitutes at least part of the accommodating cavity 204.

In the above technical solution, since the cell component 23 received in the housing component 21 is connected to the post terminal component 25 mounted on the second housing wall 243, when the battery 100 vibrates or deforms, the post terminal components 25 connected by a busbar component pull against one another. Since the post terminal component 25 is disposed on an end wall, opposite to the opening 241, of the housing body 24, the acting force applied to the post terminal component 25 is preferentially transmitted to the housing body 24 and does not directly act on the cover plate 22. This can not only increase the distance over which the acting force is transmitted to a weld seam of the housing body 24 and the cover plate 22, but also cause the housing body 24 to preferentially deform when subjected to a force, so as to reduce the force applied to the weld seam between the housing body 24 and the cover plate 22, thereby effectively reducing the probability of cracking at the weld seam between the housing body 24 and the cover plate 22 during use of the battery 100, and improving the reliability of the battery cell 20.

Specifically, when the post terminal component 25 is mounted on the second housing wall 243, if the post terminal component 25 is first mounted in the mounting hole 249 of the second housing wall 243 and then the cell component 23 is mounted in the housing body 24, it is difficult to connect the cell component 23 to the post terminal component 25. However, in the embodiments according to the present application, the cell component 23 may be connected to the post terminal component 25 first, and then the post terminal component 25 is assembled and connected to the housing component 21, such that the connection requirements between the cell component 23 and the post terminal component 25 can be met, and the connection requirements between the post terminal component 25 and the housing component 21 can also be met, thereby improving the reliability and processability of the battery cell 20.

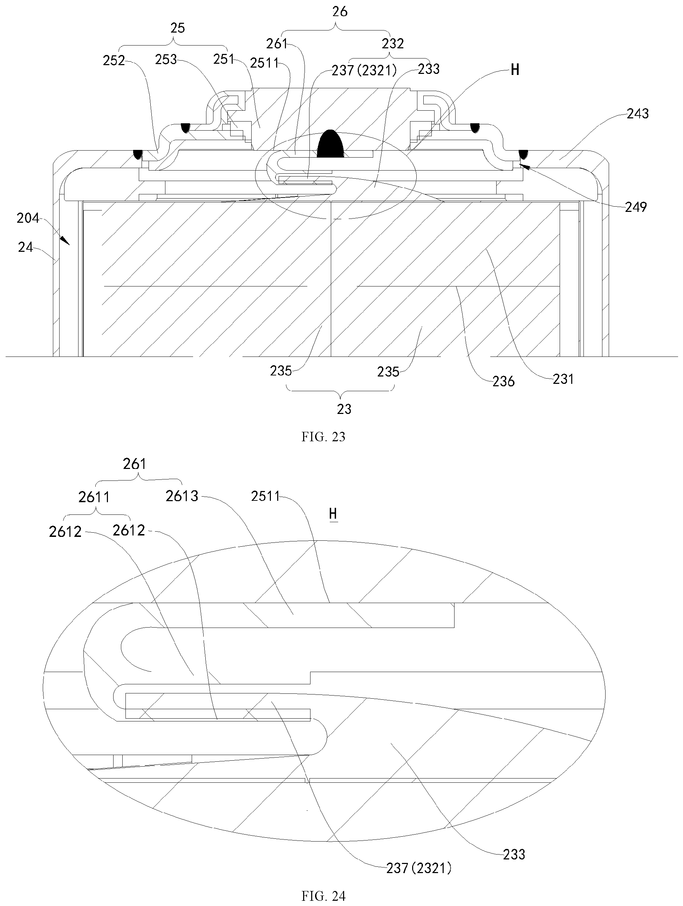

According to some embodiments of the present application, referring to FIGs. 21 and 23, the post terminal component 25 includes a post terminal body 251. The surface of the post terminal body 251 on an end facing the cell component 23 (i.e., the surface on a side facing an active substance-coated part 231) is an inner end surface 2511 of the post terminal body, and the cell component 23 is connected to the inner end surface 2511 of the post terminal body via a conductive part 26 (e.g., a tab part 232 or a conductive member 261). The cell component 23 includes one or more electrode assemblies 235. In the electrode assembly 235, the part of the current collector coated with the active substance layer forms the active substance-coated part 231, and the part of the current collector not coated with the active substance layer forms the tab part 232.

Thus, the difficulty of assembling and connecting the conductive part 26 to the post terminal body 251 can be reduced, the processing efficiency can be improved, and the reduction in the length of the conductive part 26 can be facilitated, thereby saving materials and costs.

According to some embodiments of the present application, referring to FIGs. 21 and 23 again, at least part of the conductive part 26 is laid on the inner end surface 2511 of the post terminal body. In this way, by laying at least part of the conductive part 26 on the inner end surface of the post terminal body 251, the at least part of the conductive part 26 is in a flattened and spread-out state, and the projection of the at least part of the conductive part 26 falls on the inner end surface of the post terminal body 251. This helps to improve the connection reliability between the conductive part 26 and the post terminal body 251, and helps to increase the connection area between the conductive part 26 and the post terminal body 251, thereby improving the electrical conductivity.

Illustratively, when the battery cell 202 is in an assembled state (for example, as shown in FIGs. 21 and 23), the inner end surface of the post terminal body 251 is parallel to an axial cross-section 236 of the cell component, the tab-out direction of the cell component 23 is the direction in which the active substance-coated part 231 extends out of the tab part 232, and this direction is perpendicular to the first housing wall 242. Thus, the processing and design of the post terminal body 251 are facilitated.

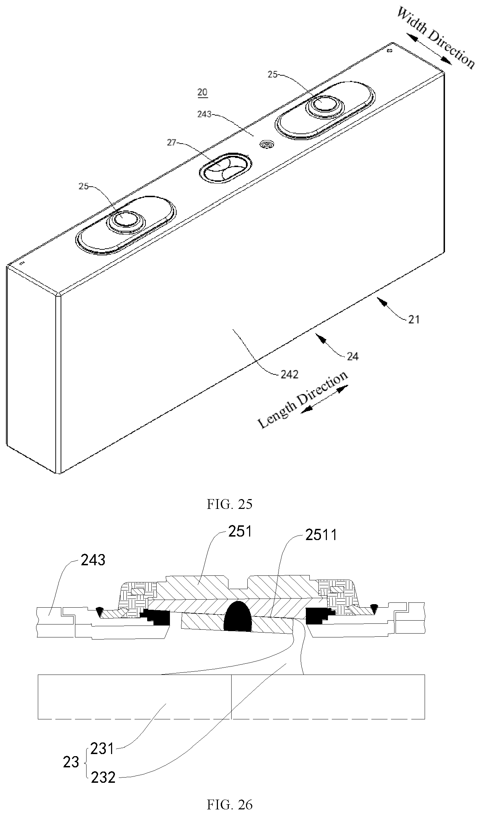

According to some embodiments of the present application, when the battery cell 202 is in an assembled state (for example, as shown in FIG. 26), the inner end surface 2511 of the post terminal body is inclined relative to the axial cross-section 236 of the cell component, and the axial cross-section 236 of the cell component is perpendicular to the tab-out direction of the cell component 23. The tab-out direction of the cell component 23 is the direction in which the active substance-coated part 231 extends out of the tab part 232, and this direction is perpendicular to the first housing wall 242. In this way, before at least part of the conductive part 26 is laid on the inner end surface of the post terminal body 251, the post terminal component 25 may be first adjusted such that the inner end surface of the post terminal body 251 is parallel to the tab-out direction of the cell component 23, thereby facilitating the laying of at least part of the conductive part 26 on the inner end surface of the post terminal body 251, and providing a relatively large welding operation space. In this case, the direction of a line connecting two ends of the post terminal body 251 (i.e., an end proximal to the cell component 23 and an end distal to the cell component 23) is inclined toward the tab-out direction of the cell component 23. Thus, after the conductive part 26 is connected to the post terminal body 251, the post terminal component 25 only needs to be flipped by less than 90° as a whole to make the direction of the line connecting the two ends of the post terminal body 251 parallel to the second housing wall 243 or the cover plate 22. Compared with the solution in which the inner end surface of the post terminal body 251 is parallel to the axial cross-section 236 of the cell component, this configuration can reduce the flipping angle of the post terminal component 25, which is conducive to shortening the length of the conductive part 26.

According to some embodiments of the present application, the cell component 23 includes an active substance-coated part 231 accommodated in the accommodating cavity 204 and a tab part 232 connected to the active substance-coated part 231, and the tab part 232 includes a gathering part 234 formed by stacking and connecting a plurality of layers of tab plates 233.

In this way, the plurality of layers of tab plates 233 are connected to form the gathering part 234, such that electrical conduction is established among the plurality of layers of tab plates 233 in the gathering part 234. That is, the plurality of layers of tab plates 233 in the gathering part 234 are not only arranged in a stacked manner, but also electrically connected and conductive. The connection method of the plurality of layers of tab plates 233 in the gathering part 234 is not limited, and may be, for example, welding (such as ultrasonic welding, ultrasonic pre-welding and laser welding, resistance welding, pressure fusion welding, or brazing), or perforated connection, or conductive adhesive bonding. Illustratively, ultrasonic welding may be performed on the plurality of layers of tab plates 233 of the same polarity, and the resulting ultrasonic weld mark is the gathering part 234.

Illustratively, the plurality of layers of tab plates 233 in the gathering part 234 may belong to the same electrode assembly 235, or may belong to different electrode assemblies 235. That is, several layers of tab plates 233 of the same polarity in the same electrode assembly 235 may be connected to form the gathering part 234, or several layers of tab plates 233 of the same polarity in different electrode assemblies 235 may be connected to form the gathering part 234. Illustratively, all tab plates 233 of the same polarity in the cell component 23 may be connected to form the gathering part 234, which can reduce the number of the gathering parts 234.

In the above technical solution, by pre-connecting the plurality of layers of tab plates 233 in the tab part 232 to form the gathering part 234, the gathering part 234 can take the form of a plate structure in which the plurality of layers of tab plates 233 are connected together and a certain rigidity is provided, rather than the form of a loose and scattered multi-layer foil structure. This facilitates the assembly and connection operations between the tab part 232 and other components, such as perforation and welding operations, such that voids are less likely to form in the weld seam formed between the tab part 232 and other components, thereby improving the connection reliability and electrical conductivity at the welding joint, and enabling the electrical conductivity between the cell component 23 and the post terminal component 25 to be more stable and reliable.

Referring to FIG. 21 again, in some embodiments of the present application, at least part of the gathering part 234 is laid on the inner end surface 2511 of the post terminal body and is connected to the inner end surface 2511 of the post terminal body. In this case, the conductive part 26 may include only the tab part 232, and the tab part 232 is directly connected to the post terminal body 251, thereby eliminating the step of connecting the conductive member 261 to the tab part 232. Furthermore, by pre-connecting the plurality of layers of tab plates 233 in the tab part 232 to form the gathering part 234, the gathering part 234 can take the form of a plate structure in which the plurality of layers of tab plates 233 are connected together and a certain rigidity is provided, rather than the form of a loose and scattered multi-layer foil structure. This facilitates the mating connection between the tab part 232 and the post terminal body 251, making the welding between the tab part 232 and the post terminal body 251 more reliable and reducing the likelihood of void formation in the weld seam, thereby improving the connection reliability and electrical conductivity at the welding joint, and enabling the electrical conductivity between the cell component 23 and the post terminal component 25 to be more stable and reliable. In addition, by laying the gathering part 234 on the inner end surface of the post terminal body 251, the gathering part 234 is in a flattened and spread-out state, and at least part of the gathering part 234 falls on the inner end surface of the post terminal body 251. This will not cause damage to the tab part 232 due to the bending of the gathering part 234, thereby improving the conductive performance. Moreover, it facilitates the pressing of the gathering part 234 by a welding press nozzle, thereby improving the connection reliability between the gathering part 234 and the post terminal body 251.

According to some embodiments of the present application, referring to FIG. 21 again, the entirety of the gathering part 234 is laid on the inner end surface 2511 of the post terminal body.

That is, the inner end surface 2511 of the post terminal body 251 is greater than or equal to the area of the gathering part 234, such that the gathering part 234 can completely fall on the inner end surface 2511 of the post terminal body 251. This helps to increase the connection area between the inner end surface 2511 of the post terminal body 251 and the gathering part 234, thereby improving the current passage efficiency.

According to some embodiments of the present application, referring to FIG. 23, the post terminal component 25 includes a post terminal body 251, the cell component 23 includes an active substance-coated part 231 accommodated in the accommodating cavity 204 and a tab part 232 connected to the active substance-coated part 231, and the tab part 232 is connected to the post terminal body 251 via a conductive member 261.

Thus, by indirectly connecting the tab part 232 to the post terminal body 251 via the conductive member 261, the length of the tab part 232 can be shortened, and problems such as wrinkling, bending, and breakage of the tab plate 233 can be alleviated. Moreover, by flexibly designing the shape and material of the conductive member 261, the difficulty in connecting to the post terminal body 251 can be reduced, thereby improving the ease of connection between the conductive member 261 and the post terminal body 251. In addition, the perforation operation of the conductive part 26, the connection operation between the conductive part 26 and the post terminal component 25 (this operation may be omitted), and the connection operation between the post terminal component 25 and the housing component 21 are all less likely to cause cracking at the connection position between the active substance-coated part 231 and the tab part 232, thereby improving the reliability of the battery cell 20.

The tab part 232 of the cell component 23 includes a stacked part 237 formed by stacking and gathering a plurality of layers of tab plates 233, and the plurality of layers of tab plates 233 in the stacked part 237 are connected to form a gathering part 234. That is, the tab part 232 includes the gathering part 234 formed by stacking and connecting a plurality of layers of tab plates 233.

Illustratively, the stacked part 237 may be connected to the conductive member 261, thereby eliminating the step of connecting the stacked part 237 to form the gathering part 234. Alternatively, illustratively, the plurality of layers of tab plates 233 in the stacked part 237 may be connected to form the gathering part 234, and then the gathering part 234 is connected to the conductive member 261, thereby enabling a flexible and diversified design of the structure of the conductive member 261.

Illustratively, the conductive member 261 may be connected to the inner end surface of the post terminal body 251, thereby shortening the length of the conductive member 261. For example, referring to FIG. 24, the conductive member 261 may include a second connecting segment 2613, and the second connecting segment 2613 may be laid on the inner end surface of the post terminal body 251 and connected to the inner end surface of the post terminal body 251, thereby improving the connection reliability and conductive performance between the conductive member 261 and the post terminal body 251. Alternatively, illustratively, the conductive member 261 may also be connected to other positions of the post terminal body 251. For example, the conductive member 261 is pre-buried in the post terminal body 251, or penetrates through the post terminal body 251 to be connected to the post terminal body 251.

According to some embodiments of the present application, referring to FIG. 24, the conductive member 261 includes a first connecting segment 2611, the first connecting segment 2611 includes two clamping parts 2612, the tab part 232 includes a tab end part 2321, and the tab end part 2321 is sandwiched between the two clamping parts 2612 and is connected to the clamping parts 2612.

The tab end part 2321 may be the stacked part 237 or the gathering part 234. Thus, the two clamping parts 2612 can be used to limit the tab end part 2321, thereby improving the connection reliability of the plurality of layers of tab plates 233 in the tab end part 2321. In addition, in some examples, by providing two clamping parts 2612, the tab end part 2321 sandwiched between the two clamping parts 2612 is enabled to be in the state of the stacked part 237, which eliminates the step of connecting the plurality of layers of tab plates 233 in the stacked part 237 to form the gathering part 234, thereby simplifying the processing procedure and improving the processing efficiency.

According to some embodiments of the present application, referring to FIG. 24 again, the surface of the post terminal body 251 on the end facing the cell component 23 is the inner end surface 2511 of the post terminal body, the conductive member 261 includes a second connecting segment 2613, the second connecting segment 2613 is laid on the inner end surface 2511 of the post terminal body and is connected to the inner end surface 2511 of the post terminal body, and the conductive member 261 is bent at a connection position between the first connecting segment 2611 and the second connecting segment 2613, such that the first connecting segment 2611 is located on a side, distal to the post terminal body 251, of the second connecting segment 2613, and one of the clamping parts 2612 is supported on a side, distal to the post terminal body 251, of the tab end part 2321. Thus, by supporting the tab part 232 with the clamping part 2612, the redundancy of the tab part 232 can be improved, and the risk of short circuit caused by the reverse insertion of the active substance-coated part 231 into the tab part 232 can be reduced. Moreover, the bent conductive member 261 can serve as a buffer and support, thereby reducing the risk of the cell component 23 impacting the housing component 21, and improving the reliability of the battery cell 20.

According to some embodiments of the present application, the tab part 232 includes a gathering part 234 formed by stacking and connecting a plurality of layers of tab plates 233, the conductive member 261 includes a first connecting segment 2611, and the gathering part 234 is stacked on a side of the first connecting segment 2611 in the thickness direction and is connected to the first connecting segment 2611. The first connecting segment 2611 is in the form of a plate, and the thickness direction of the first connecting segment 2611 is consistent with the thickness direction of the gathering part 234. The first connecting segment and the gathering part are stacked in the thickness direction of the first connecting segment 2611, such that the mating method between the gathering part 234 and the conductive member 261 is simple, which is conducive to improving the production efficiency.

According to some embodiments of the present application, the surface of the post terminal body 251 on the end facing the cell component 23 is the inner end surface 2511 of the post terminal body, and the first connecting segment 2611 is supported on a side, distal to the post terminal body 251, of the gathering part 234, such that the gathering part 234 is sandwiched between the inner end surface 2511 of the post terminal body and the first connecting segment 2611. Thus, by supporting the gathering part 234 with the first connecting segment 2611, the redundancy of the tab part 232 can be improved, and the risk of short circuit caused by the reverse insertion of the active substance-coated part 231 into the tab part 232 can be reduced.

According to some embodiments of the present application, referring to FIGs. 21 and 23 again, the post terminal component 25 includes a post terminal body 251, an adapter structure 252, and an insulating and sealing structure 253, the adapter structure 252 surrounds the post terminal body 251 and is connected to the cover plate 22 or the housing body 24, and the insulating and sealing structure 253 is fitted between the adapter structure 252 and the post terminal body 251 in an insulating and sealing manner.

The adapter structure 252 surrounds the entire periphery of the post terminal body 251 along the circumferential direction of the mounting hole 249, such that the adapter structure 252 can serve to connect the post terminal body 251 to the second housing wall 243 or connect the post terminal body 251 to the cover plate 22 in the outer peripheral region of the post terminal body 251. The insulating and sealing structure 253 insulates the adapter structure 252 from the post terminal body 251 and renders the mating position between the adapter structure 252 and the post terminal body 251 in a sealed state, so as to isolate the interior and exterior of the housing 2 after the adapter structure 252 is connected to the housing 2, thereby reducing the risk of the electrolytic solution in the housing component 21 leaking out of the housing component 21 from the mating position between the adapter structure 252 and the post terminal body 251, and reducing the risk of liquid, dust, or the like outside the housing component 21 entering the housing component 21 from the mating position between the adapter structure 252 and the post terminal body 251, thereby improving the reliability of the battery cell 20.

In the above technical solution, in addition to the post terminal body 251, the post terminal component 25 further includes the adapter structure 252 connected to the housing 2, and the insulating and sealing structure 253 serving an insulating and sealing function is disposed between the adapter structure 252 and the post terminal body 251, such that when the post terminal component 25 is mounted on the housing 2 and the adapter structure 252 is connected to the housing 2, no sealing member or the like needs to be disposed between the adapter structure 252 and the housing 2, and no large sealing pressure needs to be applied to meet the compression degree of the sealing member at this position. This can reduce the force received by the second housing wall 243 or the cover plate 22 and protect the housing 2, thereby helping to reduce the wall thickness of the housing 2 and reducing material costs. In addition, when the second housing wall 243 is located at an end of the housing body 24 opposite to the opening, the force received by the joint between the first housing wall 242 and the second housing wall 243 can be reduced, and the force received by the first housing wall 242 can be reduced, thereby helping to ensure the reliability of the housing 2 and reducing the wall thickness and cost of the housing 2.

According to some embodiments of the present application, the adapter structure 252 is formed as an elongated strip (e.g., a rectangle or a racetrack) extending in the length direction of the first housing wall 242, and the contour shape of the post terminal body 251 matches the contour shape of the adapter structure 252 (e.g., a rectangle or a racetrack). As described above, the cell component 23 is connected to the post terminal component 25 via the conductive part 26. When the contour shape of the post terminal body 251 is formed into an elongated strip matching the contour shape of the adapter structure 252, the post terminal body 251 has a large area, which is conducive to increasing the connection area between the conductive part 26 and the post terminal body 251, thereby improving the conductive performance.

In some other embodiments of the present application, referring to FIG. 25, the adapter structure 252 is formed as an elongated strip (e.g., a rectangle or a racetrack) extending in the length direction of the first housing wall 242, and the post terminal body 251 is disposed at the central position of the adapter structure 252 in the length direction and is circular. Thus, the connection position between the adapter structure 252 and the post terminal body 251 is subjected to a uniform force, making it easy to control the compression amount of the insulating and sealing structure 253, thereby improving the reliability of the sealing fit between the adapter structure and the post terminal body.

According to some embodiments of the present application, the battery cell 20 further includes a post terminal component 25 and a pressure relief device 27. The post terminal component 25 is disposed on the housing component 21, the post terminal component 25 includes a post terminal body 251, the cell component 23 includes an electrode assembly 235, tab plates 233 of the electrode assembly 235 are connected to form a gathering part 234, and the gathering part 234 is connected to the post terminal body 251. The pressure relief device 27 is disposed on the housing component 21, and the pressure relief device and the post terminal component 25 are located on the same side or different sides.

Illustratively, the pressure relief device 27 may be an anti-explosion valve mounted on the housing component 21, or a thinned region integrally formed on the housing component 21. Thus, by providing the pressure relief device 27, when the pressure in the housing component 21 exceeds a preset value, directional pressure relief can be achieved through the pressure relief device 27, thereby improving the safety and reliability of the battery cell 20.

Illustratively, with reference to FIG. 25, the pressure relief device 27 and the post terminal component 25 are located on the same side. Since the post terminal component 25 is disposed on the second housing wall 243, when the pressure relief device 27 is also disposed on the second housing wall 243, the pressure relief device 27 and the post terminal component 25 are located on the same side. Thus, the design of other housing walls other than the second housing wall 243 can be simplified, and the structure and processing of the battery cell 20 can be simplified.

Illustratively, with reference to FIG. 18, the pressure relief device 27 and the post terminal component 25 are located on different sides. Since the post terminal component 25 is disposed on the second housing wall 243, when the pressure relief device 27 is also disposed on other walls of the housing 2 other than the second housing wall 243, for example, when the pressure relief device 27 is disposed on the cover plate 22, the pressure relief device 27 and the post terminal component 25 are located on different sides. Thus, there is no need to reduce the volume of the post terminal component 25 in view of the space occupied by the pressure relief device 27 on the second housing wall 243, such that the shape and volume of the post terminal component 25 can be flexibly designed as required.

According to some embodiments of the present application, the present application further provides a battery 100, and the battery 100 includes the battery cell 20 according to any one of the above embodiments.

In the above technical solutions, the probability of cracking between a housing cover 112 and the housing body 24 of the battery cell 20 during use is relatively low, thereby improving the reliability of the battery 100 and helping to improve the performance of the electric device.

According to some embodiments of the present application, the battery 100 includes a case assembly 10, a plurality of battery cells 20 are provided and accommodated in the case assembly 10, the bottom of the case assembly 10 is a case bottom plate, the opening 241 of the housing body 24 faces the case bottom plate, and the cover plate 22 covers the bottom of the housing body 24; alternatively, the opening 241 of the housing body 24 faces away from the case bottom plate, and the cover plate 22 covers the top of the housing body 24.

Illustratively, the cover plate 22 covers the bottom of the housing body 24, and the pressure relief device 27 is disposed on the cover plate 22; alternatively, the cover plate 22 covers the top of the housing body 24, and the pressure relief device 27 is disposed on the second housing wall 243 opposite to the cover plate 22. In this way, once thermal runaway occurs in a battery cell 20, pressure can be relieved from the bottom of the battery cell 20, allowing the central venting channel design to be eliminated, thereby further freeing up space for the battery cell 20. This is conducive to improving the energy density of the battery 100, and meanwhile, directional pressure relief can be quickly achieved, such that ejecta can be rapidly discharged in a specified direction through the optimal channel, making it less likely to spread to the surrounding cells. Illustratively, the cover plate 22 covers the top of the housing body 24, and the battery cell 20 is in an upright state, such that the electrolytic solution is less prone to leakage. Therefore, the orientation of the battery cell 20 and the case assembly 10 can be flexibly arranged.

According to some embodiments of the present application, the present application further provides an electric device, and the electric device includes the battery cell 20 according to any one of the above embodiments, or includes the battery 100 according to any one of the above embodiments. The battery cell 20 or the battery 100 is used to power the electric device.

In the above technical solutions, the electric device adopts the above battery 100 or battery cell 20, thus featuring a low probability of cracking between the housing cover 112 and the housing body 24 of the battery cell 20 during use, improved reliability of the battery 100, and improved performance of the electric device.

A battery cell 20, a battery 100 having the battery cell 20, and a vehicle having the battery 100 according to six specific examples of the present utility model will be described below with reference to the drawings.

### Example 1

Referring to FIGs. 3 to 5, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Two sections are provided. Of the two sections, the section distal to the opening 241 is a second section 2422, and the section proximal to the opening 241 is the first section 2421. The thickness of the first section 2421 is greater than the thickness of the second section 2422, the thickness of the first section 2421 is 0.7 mm, and the thickness of the second section 2422 is 0.3 mm. A stepped part 245 is formed between the first section 2421 and the second section 2422, and the stepped part 245 is disposed on an outer wall surface, located on the outer side of the accommodating cavity 204, of the first housing wall 242. An inner wall surface, located on the inner side of the accommodating cavity 204, of the first housing wall 242 is a flat surface, and an end, distal to the opening 241, of the second section 2422 extends to the second housing wall 243.

### Example 2

Referring to FIGs. 6 to 7, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Three sections are provided. Of the two sections, the section distal to the opening 241 is a second section 2422, and the section proximal to the opening 241 is the first section 2421. The section between the first section 2421 and the second section 2422 is a third section 2423. The thickness of the first section 2421 is 0.7 mm, the thickness of the third section 2423 is 0.5 mm, and the thickness of the second section 2422 is 0.3 mm. A stepped part 245 is formed between the first section 2421 and the third section 2423 and between the second section 2422 and the third section 2423. The stepped part 245 is disposed on an outer wall surface, located on the outer side of the accommodating cavity 204, of the first housing wall 242. An inner wall surface, located on the inner side of the accommodating cavity 204, of the first housing wall 242 is a flat surface, and an end, distal to the opening 241, of the second section 2422 extends to the second housing wall 243.

By adopting the solution that the stepped part 245 is located on the outer wall surface on the outer side of the accommodating cavity 204, the manufacturing process of a housing 2 can be simplified.

### Example 3

Referring to FIGs. 8 to 9, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Two sections are provided. Of the two sections, the section distal to the opening 241 is a second section 2422, and the section proximal to the opening 241 is the first section 2421. The thickness of the first section 2421 is greater than the thickness of the second section 2422, the thickness of the first section 2421 is 0.7 mm, and the thickness of the second section 2422 is 0.3 mm. A stepped part 245 is formed between the first section 2421 and the second section 2422, and the stepped part 245 is disposed on an inner wall surface, located on the inner side of the accommodating cavity 204, of the first housing wall 242. The outer wall surface, located on the outer side of the accommodating cavity 204, of the first housing wall 242 is a flat surface, and an end, distal to the opening 241, of the second section 2422 extends to the second housing wall 243.

### Example 4

Referring to FIGs. 10 to 11, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Three sections are provided. Among the three sections, the section distal to the opening 241 is a second section 2422, and the section proximal to the opening 241 is the first section 2421. The section between the first section 2421 and the second section 2422 is a third section 2423. The thickness of the first section 2421 is 0.7 mm, the thickness of the third section 2423 is 0.5 mm, and the thickness of the second section 2422 is 0.3 mm. A stepped part 245 is formed between the first section 2421 and the third section 2423 and between the second section 2422 and the third section 2423. The stepped part 245 is disposed on an inner wall surface, located on the inner side of the accommodating cavity 204, of the first housing wall 242. An outer wall surface, located on the outer side of the accommodating cavity 204, of the first housing wall 242 is a flat surface, and an end, distal to the opening 241, of the second section 2422 extends to the second housing wall 243. In this solution, a housing 2 is less prone to stretching-induced rupture.

### Example 5

Referring to FIGs. 12 to 11, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Three sections are provided. Among the three sections, the section distal to the opening 241 is a second section 2422, and the section proximal to the opening 241 is the first section 2421. The section between the first section 2421 and the second section 2422 is a third section 2423. The thickness of the first section 2421 is 0.7 mm, the thickness of the third section 2423 is 0.5 mm, and the thickness of the second section 2422 is 0.3 mm. A stepped part 245 is formed between the first section 2421 and the third section 2423, as well as between the second section 2422 and the third section 2423. The stepped part 245 between the first section 2421 and the third section 2423 is disposed on an outer wall surface, located on the outer side of the accommodating cavity 204, of the first housing wall 242. The stepped part 245 between the second section 2422 and the third section 2423 is disposed on an inner wall surface, located on the inner side of the accommodating cavity 204, of the first housing wall 242. An end, distal to the opening 241, of the second section 2422 extends to the second housing wall 243. In this solution, a housing 2 is less prone to stretching-induced rupture.

### Example 6

Referring to FIGs. 13 to 15, a vehicle includes a battery 100, the battery 100 includes a battery cell 20, and the battery cell 20 includes a housing component 21, a cover plate 22, and a cell component 23. The housing component 21 includes a housing body 24, and an accommodating cavity 204 is defined inside the housing body 24. The housing body 24 is provided with an opening 241 and a first housing wall 242 surrounding the circumferential edge of the opening 241. The first housing wall 242 includes at least two sections. The section of the at least two sections that is proximal to the opening 241 is a first section 2421, and the thickness of the first section 2421 is greater than the thickness of the other sections. The cover plate 22 covers the opening 241 and is connected to the first section 2421. The cell component 23 is disposed in the accommodating cavity 204. One of two opposite ends of the housing body 24 is provided with an opening 241, and the other end is provided with a second housing wall 243.

Three sections are provided. Among the three sections, the section distal to the opening 241 is a second section 2422, and the section proximal to the opening 241 is the first section 2421. The section between the first section 2421 and the second section 2422 is a third section 2423. The thickness of the first section 2421 is 0.7 mm, the thickness of the third section 2423 is 0.5 mm, and the thickness of the second section 2422 is 0.3 mm. A stepped part 245 is formed between the first section 2421 and the third section 2423, as well as between the second section 2422 and the third section 2423. The stepped part 245 between the first section 2421 and the third section 2423 is disposed on an inner wall surface, located on the inner side of the accommodating cavity 204, of the first housing wall 242. The stepped part 245 between the second section 2422 and the third section 2423 is disposed on an outer wall surface, located on the outer side of the accommodating cavity 204, of the first housing wall 242. An end, distal to the opening 241, of the second section 2422 extends to the second housing wall 243. In this solution, a housing 2 is less prone to stretching-induced rupture.

The housing 2 of the battery cell 20 according to the embodiments of the present application can alleviate the contradiction between high energy density and high housing 2 strength as well as fatigue life in the related art, thereby significantly improving the energy density and enhancing the safety and reliability of the product. In the battery cell 20 according to the embodiments of the present application, the thickness of the welding position between the housing component 21 and the cover plate 22 is increased, while the housing 2 with a thickness of 0.3 mm is still used in the part accommodating the cell component 23, so as to ensure high energy density.

In the embodiments of the present application, the entire housing component 21 is not of equal thickness, and the thickness of the housing component is correspondingly adjusted based on the design indicators of the battery cell 20. For example, the part accommodating the cell component 23 is thinned to meet the requirements for energy density improvement and weight reduction, and the welding portion of the opening 241 is thickened to meet the requirements for welding assembly and strength improvement. Therefore, the present application can significantly improve the energy density while reducing the weight of mechanical parts and enhancing the safety and reliability of the housing 2.

It should be noted that in the absence of conflicts, the embodiments and features in the embodiments of the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing component, comprising a housing body, wherein an accommodating cavity is defined inside the housing body, the housing body is provided with an opening and a first housing wall surrounding a circumferential edge of the opening, the first housing wall comprises at least two sections, a section of the at least two sections that is proximal to the opening is a first section, and a thickness of the first section is greater than a thickness of the other sections;
a cover plate, covering the opening and connected to the first section; and
a cell component, disposed in the accommodating cavity.

2. The battery cell according to claim 1, wherein the at least two sections comprise a plurality of sections, and in a direction from the opening toward an inner side of the housing body, thicknesses of the plurality of sections sequentially decrease.

3. The battery cell according to claim 2, wherein a thickness difference between any two adjacent sections is T, wherein 0 mm < T ≤ 0.2 mm.

4. The battery cell according to any one of claims 1 to 3, wherein a section of the at least two sections that is most distal to the opening is a second section, the second section is provided with a starting edge proximal to the first section, the first section is provided with a terminal edge proximal to the starting edge, and a distance between the terminal edge and the starting edge is L, wherein 6 mm ≤ L ≤ 20 mm.

5. The battery cell according to claim 4, wherein 6 mm ≤ L ≤ 10 mm.

6. The battery cell according to any one of claims 1 to 5, wherein one of two opposite ends of the housing body is provided with the opening, and the other end is provided with a second housing wall;
a section of the at least two sections that is most distal to the opening is a second section, a thickness of the second section is less than a thickness of the other sections, and an end, distal to the opening, of the second section extends to the second housing wall.

7. The battery cell according to any one of claims 1 to 6, wherein the thickness of the first section is H1, wherein 0.5 mm < H1 ≤ 0.9 mm.

8. The battery cell according to claim 7, wherein a section of the at least two sections that is most distal to the opening is a second section, and a thickness of the second section is H2, wherein 0.1 mm ≤ H2 < 0.5 mm.

9. The battery cell according to claim 8, wherein the at least two sections comprise three sections, a section located at a middle position among the three sections is a third section, and a thickness of the third section is H3, wherein 0.3 mm < H3 ≤ 0.7 mm.

10. The battery cell according to any one of claims 1 to 9, wherein a first transition chamfer or a first transition fillet is provided between any two adjacent sections.

11. The battery cell according to any one of claims 1 to 10, wherein a stepped part is formed between any two adjacent sections, an inner wall surface, located on an inner side of the accommodating cavity, of the first housing wall is provided with the stepped part, and an outer wall surface, located on an outer side of the accommodating cavity, of the first housing wall is a flat surface.

12. The battery cell according to any one of claims 1 to 10, wherein a stepped part is formed between any two adjacent sections, an outer wall surface, located on an outer side of the accommodating cavity, of the first housing wall is provided with the stepped part, and an inner wall surface, located on an inner side of the accommodating cavity, of the first housing wall is a flat surface.

13. The battery cell according to any one of claims 1 to 10, wherein a stepped part is formed between any two adjacent sections, and an outer wall surface located on an outer side of the accommodating cavity and an inner wall surface located on an inner side of the accommodating cavity of the first housing wall are provided with the stepped part.

14. The battery cell according to any one of claims 1 to 13, wherein the first section is provided with a groove located on an inner side of the accommodating cavity, a side end, close to an opening edge, of the cover plate is provided with a protruding part, and the protruding part is disposed in the groove.

15. The battery cell according to any one of claims 1 to 14, wherein a second transition chamfer or a second transition fillet is formed at an end, distal to the accommodating cavity, of the opening.

16. The battery cell according to any one of claims 1 to 15, wherein one of two opposite ends of the housing body is provided with the opening, and the other end is provided with a second housing wall; the battery cell further comprises a post terminal component, and the cell component is connected to the post terminal component;
wherein the second housing wall is provided with a mounting hole, and the post terminal component is mounted on the second housing wall and covers the mounting hole; or the cover plate is provided with a mounting hole, and the post terminal component is mounted on the cover plate and covers the mounting hole.

17. The battery cell according to claim 16, wherein the post terminal component comprises a post terminal body, a surface of the post terminal body on an end facing the cell component is an inner end surface of the post terminal body, and the cell component is connected to the inner end surface of the post terminal body via a conductive part.

18. The battery cell according to claim 17, wherein the cell component comprises an active substance-coated part accommodated in the accommodating cavity and a tab part connected to the active substance-coated part, the tab part comprises a gathering part formed by stacking and connecting a plurality of layers of tab plates, and at least part of the gathering part is laid on the inner end surface of the post terminal body and is connected to the inner end surface of the post terminal body.

19. The battery cell according to claim 16 or 17, wherein the post terminal component comprises a post terminal body, the cell component comprises an active substance-coated part accommodated in the accommodating cavity and a tab part connected to the active substance-coated part, and the tab part is connected to the post terminal body via a conductive member.

20. The battery cell according to claim 19, wherein the conductive member comprises a first connecting segment, the first connecting segment comprises two clamping parts, the tab part comprises a tab end part, and the tab end part is sandwiched between the two clamping parts and is connected to the clamping parts.

21. The battery cell according to claim 20, wherein a surface of the post terminal body on an end facing the cell component is an inner end surface of the post terminal body, the conductive member comprises a second connecting segment, the second connecting segment is laid on the inner end surface of the post terminal body and is connected to the inner end surface of the post terminal body, the conductive member is bent at a connection position between the first connecting segment and the second connecting segment, such that the first connecting segment is located on a side, distal to the post terminal body, of the second connecting segment, and one of the clamping parts is supported on a side, distal to the post terminal body, of the tab end part.

22. The battery cell according to claim 19, wherein the tab part comprises a gathering part formed by stacking and connecting a plurality of layers of tab plates, the conductive member comprises a first connecting segment, and the gathering part is stacked on a side of the first connecting segment in a thickness direction and is connected to the first connecting segment.

23. The battery cell according to claim 22, wherein a surface of the post terminal body on an end facing the cell component is an inner end surface of the post terminal body, and the first connecting segment is supported on a side, distal to the post terminal body, of the gathering part, such that the gathering part is sandwiched between the inner end surface of the post terminal body and the first connecting segment.

24. The battery cell according to any one of claims 16 to 23, wherein the post terminal component comprises a post terminal body, an adapter structure, and an insulating and sealing structure, the adapter structure surrounds the post terminal body and is connected to the cover plate or the housing body, and the insulating and sealing structure is fitted between the adapter structure and the post terminal body in an insulating and sealing manner.

25. The battery cell according to claim 24, wherein the adapter structure is formed as an elongated strip extending in a length direction of the first housing wall, and a contour shape of the post terminal body matches a contour shape of the adapter structure; or the adapter structure is formed as an elongated strip extending in a length direction of the first housing wall, and the post terminal body is disposed at a central position of the adapter structure in the length direction and is circular.

26. The battery cell according to any one of claims 1 to 25, further comprising:
a post terminal component, wherein the post terminal component is disposed on the housing component, the post terminal component comprises a post terminal body, the cell component comprises an electrode assembly, tab plates of the electrode assembly are connected to form a gathering part, and the gathering part is connected to the post terminal body; and
a pressure relief device, wherein the pressure relief device is disposed on the housing component, and the pressure relief device and the post terminal component are located on a same side or different sides.

27. A battery, comprising the battery cell according to any one of claims 1 to 26.

28. The battery according to claim 27, wherein the battery comprises a case assembly, a plurality of battery cells are provided and accommodated in the case assembly, a bottom of the case assembly is a case bottom plate, an opening of the housing body faces the case bottom plate, and the cover plate covers a bottom of the housing body; or the opening of the housing body faces away from the case bottom plate, and the cover plate covers a top of the housing body.

29. An electric device, comprising the battery cell according to any one of claims 1 to 26 or the battery according to claim 27 or 28.
